# EUROPEAN PATENT SPECIFICATION

(11) **EP 3 098 686 B1**
(45) Date of publication and mention of the grant of the patent: **11.04.2018**
(21) Application number: 16167604.4
(22) Date of filing: 29.04.2016
(51) Int. Cl.: G05G 5/03, G05G 5/05, G05G 1/04, F16H 59/10, F16H 61/24

(54) **OPERATION DEVICE AND VEHICLE SHIFT DEVICE USING THE OPERATION DEVICE**
BETRIEBSVORRICHTUNG UND FAHRZEUGSCHALTVORRICHTUNG MIT DER BETRIEBSVORRICHTUNG
DISPOSITIF DE FONCTIONNEMENT ET DISPOSITIF DE COMMANDE DE VITESSE DE VÉHICULE L'UTILISANT

(30) Priority: 26.05.2015 JP 2015106781
(43) Date of publication of application: 30.11.2016
(73) Proprietor: Alps Electric Co., Ltd., Tokyo 145-8501 (JP)
(72) Inventor: Uenomachi, Takashi, Tokyo, Tokyo 145-8501 (JP)
(74) Representative: Schmitt-Nilson Schraud Waibel Wohlfrom Patentanwälte Partnerschaft mbB

(56) References cited:
- EP-A1- 1 615 250
- EP-A2- 0 091 100
- WO-A1-83/00398
- WO-A1-2014/023529
- DE-A1-102014 108 195
- US-A- 4 723 458
- US-A1- 2002 056 334

## Description

### BACKGROUND OF THE INVENTION

### 1. Field of the Invention

The present invention relates to an operation device used for an operation body that is operated when being tilted, and more particularly relates to an operation device using a magnetic body and a vehicle shift device using the operation device.

### 2. Description of the Related Art

In general, an operation body that is operated when being tilted is used for a remote controller of any of various electronic devices, such as a television system and a video player/recorder; an input device of a game machine; an operation device for a vehicle; etc. In particular, the input device of the game machine, the operation device for the vehicle, etc., uses an operation device of a type that an operator grips an operation body and performs a tilting operation. Regarding the operation device for the vehicle etc., to improve operation feeling, it has been desired that a tactile feel is provided when the operation body is tilted and hence a switching operation is performed.

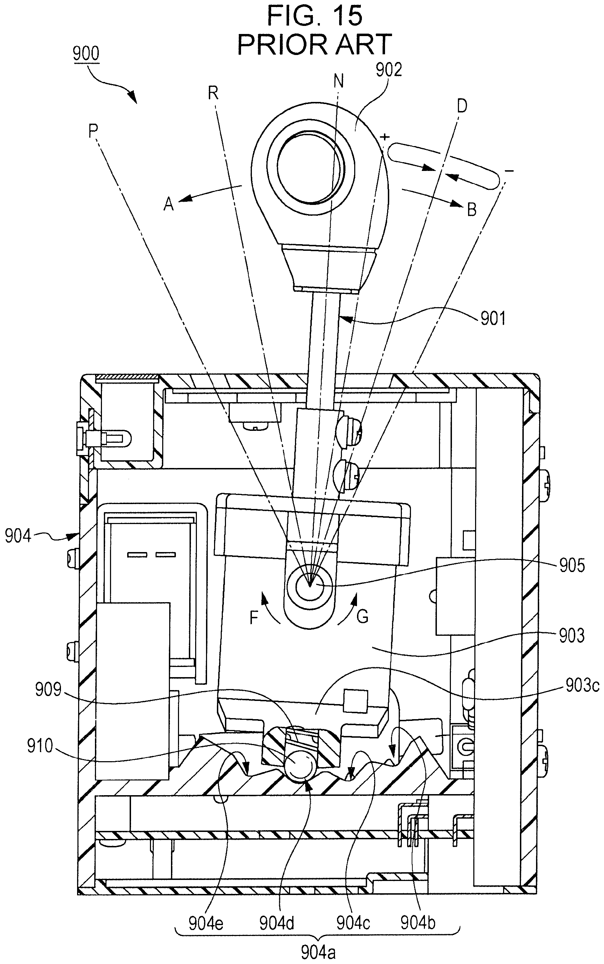

As a multi-directional input operation device having the tactile feel, Japanese Unexamined Patent Application Publication No. 2002-144905 (related art) suggests an automatic transmission shift operation device 900 as shown in Fig. 15. Fig. 15 is an enlarged vertical cross-sectional view showing a state in which a shift lever 901 is at an N range (a neutral range) in the automatic transmission shift operation device 900 of the related art.

The automatic transmission shift operation device 900 shown in Fig. 15 includes the shift lever 901 having a knob 902 fixed thereto and being able to swing; a holder 903 fixed to the shift lever 901 and being able to swing; a first shaft 905 and a second shaft (not shown) orthogonal to the first shaft 905 allowing the shift lever 901 to swing; and a case 904 rotatably supporting the first shaft 905 and the second shaft.

As shown in Fig. 15, in the automatic transmission shift operation device 900, the shift lever 901 can swing to respective positions including a P range (a parking range), an R range (a reverse range), the N range (the neutral range), and a D range (a drive range), while using the first shaft 905 as a swing shaft. At this time, the shift lever 901 is supported at each of the positions (the P range, R range, N range, and D range) and the shift lever 901 is automatically returned by using a tactile spring 909 and a tactile body 910 provided in a lower body portion 903c of the holder 903, and tactile grooves 904a formed at the inner bottom of the case 904. To be specific, as shown in Fig. 15, the tactile grooves 904a include a first tactile groove 904b that supports the shift lever 901 at the P range, a second tactile groove 904c that supports the shift lever 901 at the R range, a third tactile groove 904d that supports the shift lever 901 at the N range, and a fourth tactile groove 904e that supports the shift lever 901 at the D drive. The first to fourth tactile grooves 904b to 904e are formed in a front-rear direction. The tactile body 910 is urged by the tactile spring 909 and slides in the tactile grooves 904a.

The automatic transmission shift operation device 900 configured as described above gives a tactile feel to the shift lever 901 when the tactile body 910 moves through the tactile grooves 904a (904b, 904c, 904d, and 904e) provided respectively for the positions (the P range, R range, N range, and D range).

### SUMMARY OF THE INVENTION

However, since the related art uses a slide mechanism in which the tactile body 910 slides in the tactile grooves 904a to give the tactile feel, if a swing operation is repetitively made on the shift lever 901, the durability of the slide mechanism decreases, such as wearing of the tactile grooves 904a and the tactile spring 909, deterioration in the spring property of the tactile spring 909, and rattling between the tactile spring 909 and the tactile body 910.

Accordingly, the present invention provides an operation device having a tactile feel and having high durability, and a vehicle shift device using the operation device.

To address the problems, there is provided an operation device according to an aspect of the invention including an operation member being able to make a tilting motion in response to an operation by an operator, and a support body supporting the operation member to be able to make the tilting motion, the operation device having a plurality of positions at which the operation member is located in response to a tilting operation from a reference position by the operator. The operation device includes a plurality of stopper portions respectively corresponding to the plurality of positions; a plurality of movable members making the tilting motion together with the operation member; a pair of movable magnetic bodies respectively provided at the movable members and facing each other; and a counter magnetic body arranged between the pair of movable magnetic bodies. The movable magnetic bodies each are a soft magnetic material, and the counter magnetic body is a permanent magnet. The counter magnetic body is fixed to one of the pair of movable magnetic bodies. When the operation member is at the reference position, the pair of movable magnetic bodies are closely arranged and attracted to each other. When the operation member is tilted from the reference position and is located at one of the plurality of positions, one of the pair of movable magnetic bodies makes the tilting motion, and the tilting motion of the other one of the pair of movable magnetic bodies is stopped by the corresponding stopper portion.

With the operation device of the invention, at change of the position from the reference position to one of the plurality of positions, the tilting motion in the first direction of one of the pair of movable magnetic bodies is continued, and the tilting motion of the other movable magnetic body is stopped by the corresponding stopper portion. Hence, at each position, the pair of movable magnetic bodies are detached and separated from each other. The change from the strongly attracted state to the weakly attracted state can give the operator a tactile feel. Accordingly, as compared with the related art, since a sliding mechanism is not provided at the portion that generates a tactile feel, the operation device with high durability can be provided.

Also, in the operation device according to the aspect of the invention, the movable members each may be a soft magnetic material, and may be integrally formed with the corresponding movable magnetic body.

Accordingly, the number of parts of the operation device can be decreased, and this portion can be decreased in thickness.

Also, in the operation device according to the aspect of the invention, the support body may include a tilting shaft allowing the operation member to make the tilting motion. The operation member may include a columnar operation shaft, and a base portion extending in a plane, an axis center of the operation shaft penetrating through the plane. The base portion may rotate around the tilting shaft as an axis center. The base portion may include a first pressing portion and a second pressing portion respectively provided at both sides of the operation shaft with the tilting shaft interposed therebetween. The plurality of movable members may include a first movable member arranged to face the first pressing portion, and a second movable member arranged to face the second pressing portion. The plurality of movable magnetic bodies may include a first movable magnetic body provided at the first movable member, a second movable magnetic body provided at the second movable member, a third movable magnetic body forming a pair with the first movable magnetic body, and a fourth movable magnetic body forming a pair with the second movable magnetic body. The plurality of movable members may include a third movable member provided with the third movable magnetic body, and a fourth movable member provided with the fourth movable magnetic body. When the operation member receives the tilting operation in a first direction, the first pressing portion making the tilting motion in a tilting operation direction of the base portion may press the facing first movable member, the first movable magnetic body provided at the first movable member may make the tilting motion, the corresponding stopper portion may stop the tilting motion of the third movable magnetic body, and the first movable magnetic body may be separated from the third movable magnetic body. When the tilting operation is further continued in the first direction, the second pressing portion may press the facing second movable member, the second movable magnetic body provided at the second movable member may make the tilting motion, the corresponding stopper portion may stop the tilting motion of the fourth movable magnetic body, and the second movable magnetic body may be separated from the fourth movable magnetic body.

With this configuration, the first movable magnetic body making the tilting motion is easily separated from the third movable magnetic body stopped by the stopper portion. When the tilting operation is further continued in the tilting operation direction, the second movable magnetic body located at the opposite side with respect to the tilting shaft and making the tilting motion is easily separated from the fourth movable magnetic body stopped by the stopper portion. Accordingly, the pair of the first movable magnetic body and the third movable magnetic body can be easily separated from each other and the pair of the second movable magnetic body and the fourth movable magnetic body can be easily separated from each other depending on each of the positions. Therefore, the operation device having a tactile feel can be easily fabricated.

Also, in the operation device according to the aspect of the invention, the base portion may include a third pressing portion facing the third movable member, and a fourth pressing portion facing the fourth movable member. The third pressing portion and the fourth pressing portion may be respectively provided at both sides of the operation shaft with the tilting shaft interposed therebetween. When the operation member receives the tilting operation in a second direction, the third pressing portion making the tilting motion in the tilting operation direction of the base portion may press the facing third movable member, the third movable magnetic body provided at the third movable member may make the tilting motion, the corresponding stopper portion may stop the tilting motion of the first movable magnetic body, and the first movable magnetic body may be separated from the third movable magnetic body. When the tilting operation is further continued in the second direction, the fourth pressing portion may press the facing fourth movable member, the fourth movable magnetic body provided at the fourth movable member may make the tilting motion, the corresponding stopper portion may stop the tilting motion of the second movable magnetic body, and the second movable magnetic body may be separated from the fourth movable magnetic body.

With this configuration, the third movable magnetic body making the tilting motion is easily separated from the first movable magnetic body stopped by the stopper portion. When the tilting operation is further continued in the second direction, the fourth movable magnetic body located at the opposite side with respect to the tilting shaft and making the tilting motion is easily separated from the second movable magnetic body stopped by the stopper portion. Accordingly, the pair of the first movable magnetic body and the third movable magnetic body can be easily separated from each other and the pair of the second movable magnetic body and the fourth movable magnetic body can be easily separated from each other depending on each of the positions. Therefore, the operation device having a tactile feel can be easily fabricated.

Alternatively, in the operation device according to the aspect of the invention, the base portion may include a fifth pressing portion facing the third movable member, and a sixth pressing portion facing the fourth movable member. The fifth pressing portion and the sixth pressing portion may be respectively provided at both sides of the operation shaft with the tilting shaft interposed therebetween. When the operation member receives the tilting operation in a second direction, the sixth pressing portion making the tilting motion in the tilting operation direction of the base portion may press the facing fourth movable member, the fourth movable magnetic body provided at the fourth movable member may make the tilting motion, the corresponding stopper portion may stop the tilting motion of the second movable magnetic body, and the second movable magnetic body may be separated from the fourth movable magnetic body. When the tilting operation is further continued in the second direction, the fifth pressing portion may press the facing third movable member, the third movable magnetic body provided at the third movable member may make the tilting motion, the corresponding stopper portion stops the tilting motion of the first movable magnetic body, and the first movable magnetic body may be separated from the third movable magnetic body.

With this configuration, the fourth movable magnetic body making the tilting motion is easily separated from the second movable magnetic body stopped by the stopper portion. When the tilting operation is further continued in the second direction, the third movable magnetic body located at the opposite side with respect to the tilting shaft and making the tilting motion is easily separated from the first movable magnetic body stopped by the stopper portion. Accordingly, the pair of the second movable magnetic body and the fourth movable magnetic body can be easily separated from each other and the pair of the first movable magnetic body and the third movable magnetic body can be easily separated from each other depending on each of the positions. Therefore, the operation device having a tactile feel can be easily fabricated.

Also, in the operation device according to the aspect of the invention, both end sides of each of the pair of movable magnetic bodies may be bent so that end surfaces of one of the pair of movable magnetic bodies face end surfaces of the other.

With this configuration, the magnetic flux generated by the counter magnetic body (a permanent magnet) is further trapped between the pair of movable magnetic bodies. Hence, the attraction forces between the pair of movable magnetic bodies can be increased, and an operation load feel and a tactile feel with higher strengths can be given to the operator. In contrast, if the operation load feel and the tactile feel may have equivalent strengths, the pair of movable magnetic bodies and the counter magnetic body can be decreased in size.

Also, in the operation device according to the aspect of the invention, when the operation member is tilted and the pair of movable magnetic bodies are separated from each other, the pair of movable magnetic bodies may be arranged at positions at which attraction forces acting therebetween are not lost.

With this configuration, at each of the positions, when the force of the tilting operation by the operator is removed, the pair of movable magnetic bodies being detached from each other are attracted to each other again by their attraction forces acting therebetween. Accordingly, the operation member can be automatically returned to the reference position without use of an urging member for automatic return.

Also, there is provided a vehicle shift device according to another aspect of the invention including the above-described operation device; a control unit for receiving a signal from the operation device and transmitting a signal to a vehicle-side device; a shift knob engaged with the operation member of the operation device and gripped by the operator; and position detecting means for detecting the plurality of positions at which the operation member is located.

With this configuration, the operation device that can perform an operation to each of the positions can be preferably applied to a shift arrangement (a shift pattern) of the vehicle shift device. Accordingly, the vehicle shift device can perform a shift operation having a tactile feel. In addition, since the portion that generates a tactile feel does not include a sliding mechanism unlike the related art, the vehicle shift device having high durability can be provided.

### BRIEF DESCRIPTION OF THE DRAWINGS

Fig. 1 is a perspective view describing a vehicle shift device using an operation device according to a first embodiment of the invention;
Figs. 2A and 2B are illustrations describing the vehicle shift device using the operation device according to the first embodiment of the invention, Fig. 2A being a front view from the X2 side shown in Fig. 1, Fig. 2B being a side view from the Y2 side shown in Fig. 1;
Fig. 3 is an exploded perspective view describing the vehicle shift device using the operation device according to the first embodiment of the invention;
Figs. 4A and 4B are illustrations specifically describing an operation of the vehicle shift device using the operation device according to the first embodiment of the invention, Fig. 4A being a plan view showing arrangement of a shift of a vehicle, Fig. 4B being a plan view showing a position of a shift knob;
Fig. 5 is an illustration describing the operation device according to the first embodiment of the invention, Fig. 5 being a perspective view of a primary portion of the operation device;
Figs. 6A and 6B are illustrations describing the operation device according to the first embodiment of the invention, Fig. 6A being a front view from the X2 side shown in Fig. 5, Fig. 6B being a side view from the Y2 side shown in Fig. 5;
Figs. 7A and 7B are illustrations describing the operation device according to the first embodiment of the invention, Fig. 7A being a perspective view of an operation member, Fig. 7B being a front view of the operation member when viewing Fig. 7A from the X2 side;
Fig. 8 is an illustration describing a support body of the operation device according to the first embodiment of the invention, Fig. 8 being an upper perspective view of a frame body of the support body;
Figs. 9A to 9C are schematic illustrations describing a motion in the operation device according to the first embodiment of the invention, Fig. 9A being an illustration of a state at a reference position, Fig. 9B being an illustration of a tilting state in a first direction, Fig. 9C being an illustration of a tilting state in the first direction further from Fig. 9B;
Figs. 10A to 10C are schematic illustrations describing a motion in the operation device according to the first embodiment of the invention, Fig. 10A being an illustration of the state at the reference position, Fig. 10B being an illustration of a tilting state in a second direction, Fig. 10C being an illustration of a tilting state in the second direction further from Fig. 10B;
Figs. 11A and 11B are illustrations describing an operation device according to a second embodiment of the invention, Fig. 11A being a perspective view of an operation member, Fig. 11B being a side view of the operation member when viewing Fig. 11A from the X2 side;
Fig. 12 is an illustration describing the operation device according to the second embodiment of the invention, Fig. 12 being a side view compared with Fig. 6A showing the primary portion of the operation device according to the first embodiment;
Figs. 13A to 13C are schematic illustrations describing a motion in the operation device according to the second embodiment of the invention, Fig. 13A being an illustration of a state at a reference position, Fig. 13B being an illustration of a tilting state in a first direction, Fig. 13C being an illustration of a tilting state in the first direction further from Fig. 13B;
Figs. 14A to 14C are schematic illustrations describing a motion in the operation device according to the second embodiment of the invention, Fig. 14A being an illustration of the state at the reference position, Fig. 14B being an illustration of a tilting state in a second direction, Fig. 14C being an illustration of a tilting state in the second direction further from Fig. 14B; and
Fig. 15 is an enlarged vertical cross-sectional view showing a state in which a shift lever is at an N range (a neutral range) in an automatic transmission shift operation device of related art.

### DESCRIPTION OF THE PREFERRED EMBODIMENTS

Embodiments of the invention are described below with reference to the drawings.

### First Embodiment

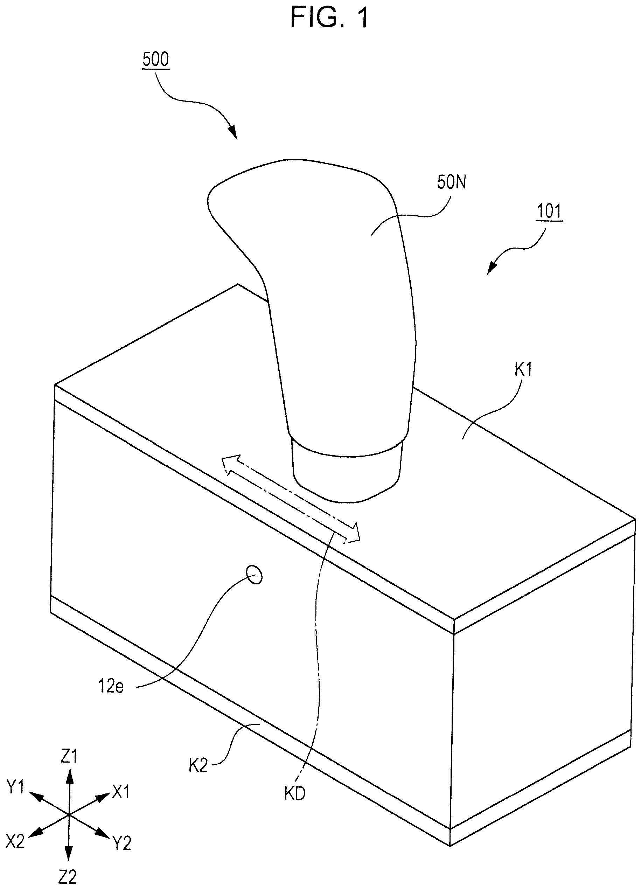

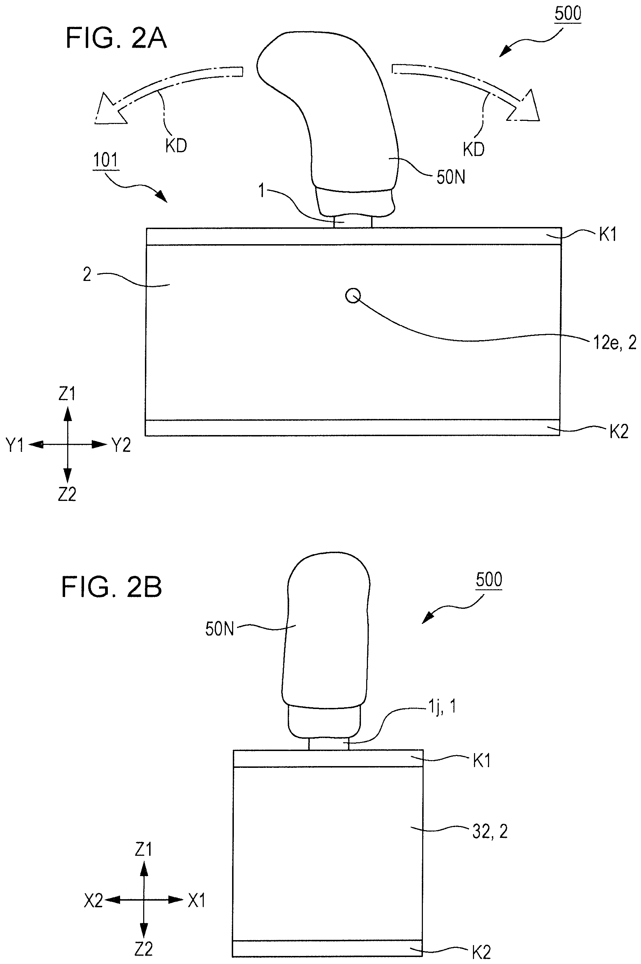

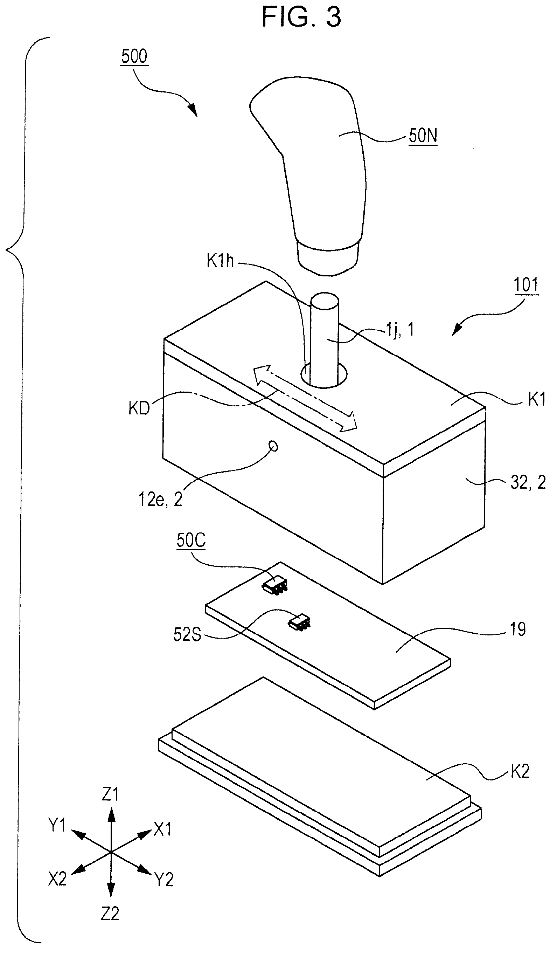

In a first embodiment of the invention, an operation device 101 and a vehicle shift device 500 are described. The vehicle shift device 500 using the operation device 101 is described first. Fig. 1 is a perspective view describing the vehicle shift device 500 using the operation device 101 according to the first embodiment of the invention. Figs. 2A and 2B are illustrations describing the vehicle shift device 500 using the operation device 101 according to the first embodiment of the invention, Fig. 2A being a front view from the X2 side shown in Fig. 1, Fig. 2B being a side view from the Y2 side shown in Fig. 1. Fig. 3 is an exploded perspective view describing the vehicle shift device 500 using the operation device 101 according to the first embodiment of the invention.

The vehicle shift device 500 using the operation device 101 according to the first embodiment of the invention has a box-shaped external appearance as shown in Figs. 1 to 2B, and, as shown in Fig. 3, includes a shift knob 50N that is gripped by an operator, the operation device 101 that can be operated in multiple directions in response to a tilting operation of the shift knob 50N by the operator, a control unit 50C that receives a signal from the operation device 101 and transmits a signal to a vehicle-side device, and position detecting means (not shown) for detecting a plurality of positions at which an operation member 1 of the operation device 101 is located. Also, in the first embodiment of the invention, as shown in Fig. 3, the vehicle shift device 500 includes an upper cover K1 and a lower cover K2 that respectively cover upper and lower open portions of a frame body 32 (forming the external appearance of the vehicle shift device 500) used as a portion of a support body 2 (described later) in the operation device 101, and a wiring board 19 housed in the frame body 32 of the operation device 101 and having the control unit 50C mounted thereon. The vehicle shift device 500 is mounted on a vehicle, allows a tilting operation to be performed in a front-rear direction (a tilting direction KD, Y direction shown in Fig. 2A), and is used for a shift operation of the vehicle.

As shown in Figs. 1 to 3, the shift knob 50N of the vehicle shift device 500 has a long and narrow shape so as to be easily gripped by the operator. Also, as shown in Figs. 1 to 2B, the shift knob 50N is engaged with the operation member 1 and arranged so as to cover an operation shaft 1j of the operation member 1 of the operation device 101 shown in Fig. 3.

The control unit 50C of the vehicle shift device 500 is configured by using an integrated circuit (IC), and is mounted on the wiring board 19 (see Fig. 3) housed in the box-shaped frame body 32 (described later) of the operation device 101. The control unit 50C is connected with the vehicle-side device through a connector (not shown), and transmits a position information signal indicative of the tilting operation of the shift knob 50N to the vehicle-side device. In response to this position information signal, the vehicle side provides a motion corresponding to a shift pattern, and displays a position of the shift knob 50N corresponding to the shift pattern on a display unit provided at an instrument panel or the like.

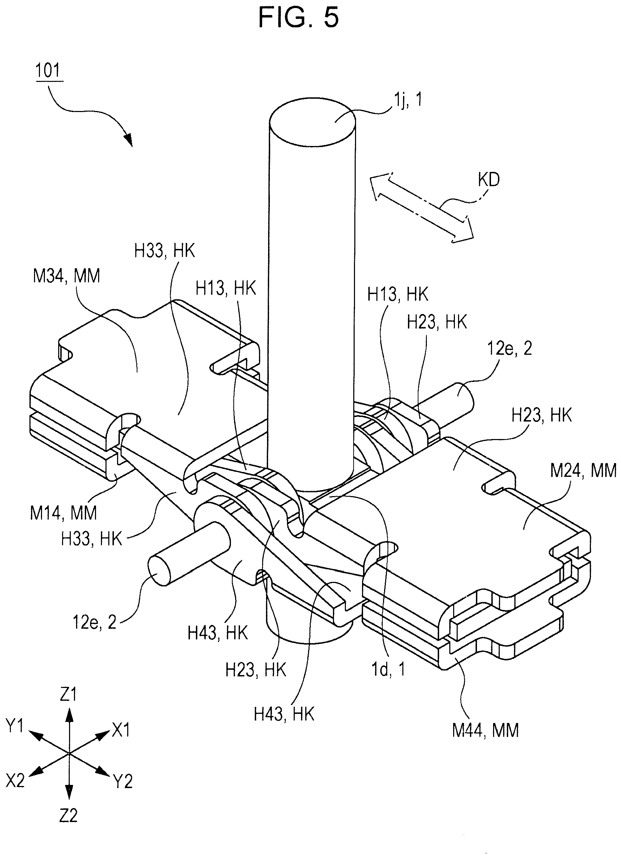

The position detecting means of the vehicle shift device 500 uses a rotational variable resistor including a substrate having a resistance pattern formed thereon, and a wiper that slides on the resistance pattern. The position detecting means includes a position detector for detecting a plurality of positions by the tilting operation in the tilting direction KD. The position detector is housed in the box-shaped frame body 32 of the operation device 101. Although described later, the position detector is engaged with a tilting shaft 12e (see Fig. 5, described later) of the support body 2, and detects the rotation angle of the tilting shaft 12e.

The position detecting means also includes a signal processing unit 52S that processes a signal from the position detector. As shown in Fig. 3, the signal processing unit 52S is mounted on the wiring board 19. The signal processing unit 52S is connected with the position detector through flexible printed circuits (FPC, not shown). The signal processing unit 52S calculates the rotation angle of the tilting shaft 12e on the basis of the signal from the position detector, and detects the movement in the tilting direction KD of the operation member 1 from the rotation angle.

The upper cover K1, lower cover K2, and the wiring board 19 of the vehicle shift device 500 are described. The upper cover K1 of the vehicle shift device 500 is formed by molding a synthetic resin material such as polybutyleneterephtalate (PBT). As shown in Fig. 3, the upper cover K1 is formed in a plate-like shape, and is arranged to cover an open portion at the upper side of the frame body 32 of the operation device 101 (see Figs. 1 to 2B). Although not shown, the upper cover K1 is engaged with the frame body 32.

Also, as shown in Fig. 3, the upper cover K1 has a circular through hole Klh at a center portion thereof. The operation shaft 1j of the operation member 1 is inserted through the through hole Klh, and the operation shaft 1j is exposed at the upper surface side of the upper cover K1.

The lower cover K2 of the vehicle shift device 500 is formed by molding a synthetic resin material such as polybutyleneterephtalate (PBT) similarly to the upper cover K1. As shown in Fig. 3, the lower cover K2 is formed in a plate-like shape, and is arranged to cover an open portion at the lower side of the frame body 32 (see Figs. 1 to 2B). Although not shown, the lower cover K2 is engaged with the frame body 32.

The wiring board 19 of the vehicle shift device 500 uses a typical one-side printed wiring board. As described above, the control unit 50C and the signal processing unit 52S are mounted on the wiring board 19 (see Fig. 3). Also, although not shown, the wiring board 19 is connected with a flexible printed board (FPC) for electric connection with the position detector and the signal processing unit 52S, and has a connector mounted thereon for connection with an external device.

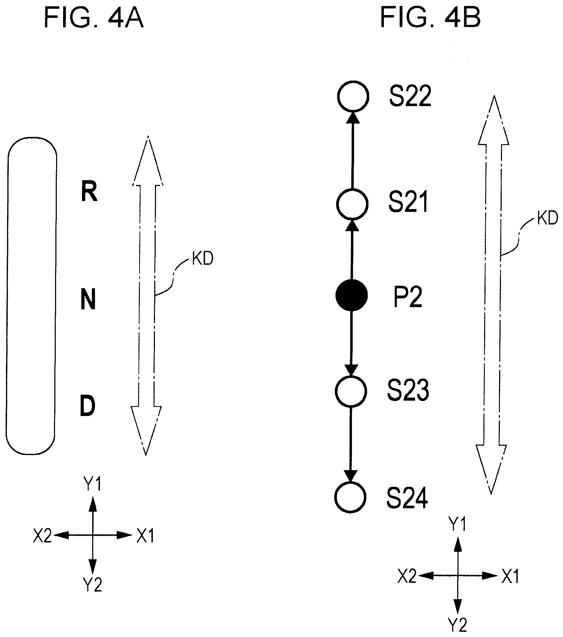

Now, a shift operation of the vehicle shift device 500 using the operation device 101 according to the first embodiment of the invention is described in detail with reference to Figs. 4A and 4B. Figs. 4A and 4B are illustrations specifically describing an operation of the vehicle shift device 500 using the operation device 101 according to the first embodiment of the invention, Fig. 4A being a plan view showing a shift arrangement (a shift pattern) of the vehicle, Fig. 4B being a plan view showing a position of the shift knob 50N. A shift pattern shown in Fig. 4A is displayed on the display unit provided at the instrument panel or the like described above. Also, the position shown in Fig. 4B schematically illustrates a position when the shift knob 50N (the operation member 1) is operated and the operation member 1 is moved.

The vehicle shift device 500 according to the first embodiment of the invention is applied to a vehicle of electronic control system, but not to a vehicle of mechanical control system with the shift knob 50N directly connected with a transmission. Hence, the shift operation of the vehicle is performed only by an information signal of a shift position transmitted from the operation device 101. The shift position is indicated by the shift pattern displayed on the display unit provided at the above-described instrumental panel.

For example, when the shift knob 50N (the operation member 1) is at a reference position P2 shown in Fig. 4B and the shift position is at a neutral mode "N" shown in Fig. 4A, if a tilting operation of the shift knob 50N is performed in the Y1 direction of the tilting direction KD to a front first position S21 shown in Fig. 4B, an information signal indicative of that the shift position has been moved to a reverse mode "R" shown in Fig. 4A is transmitted to the vehicle side, and a shift operation of the vehicle is performed. The operator releases the hand from the shift knob 50N because the operator has completed the operation, and the shift knob 50N is automatically returned to the reference position P2.

Also, in a subsequent operation, if a tilting operation is performed on the shift knob 50N located at the reference position P2 in the Y2 direction of the tilting direction KD sequentially to a rear first position S23 and then a rear second position S24 shown in Fig. 4B, the shift position at the reverse mode "R" is moved sequentially to the neutral mode "N" and then a drive mode "D" shown in Fig. 4A. In response to this operation, an information signal indicative of that the shift position has been moved to the drive mode "D" shown in Fig. 4A is transmitted to the vehicle side, and a shift operation of the vehicle is performed. The operator releases the hand from the shift knob 50N because the operator has completed the operation, and the shift knob 50N is automatically returned to the reference position P2.

In this way, in the vehicle shift device 500, an automatic operation position serving as a reference position is allocated to the reference position P2 of the operation member 1 of the operation device 101, and is used for automatic operations including the reverse mode "R," the neutral mode "N," and the drive mode "D." At this time, as described above, to switch the mode from the reverse mode "R" to the drive mode "D," the operation member 1 of the operation device 101 can perform the tilting operation by two steps in the Y2 direction to the rear first position S23 and then the rear second position S24. Similarly, to switch the mode from the drive mode "D" to the reverse mode "R," the operation member 1 of the operation device 101 can perform the tilting operation by two steps in the Y1 direction to the front first position S21 and then a front second position S22 shown in Fig. 4B. It is to be noted that Figs. 2A, 2B, and 3 also illustrate the tilting direction KD of the tilting operation for easier understanding of the description.

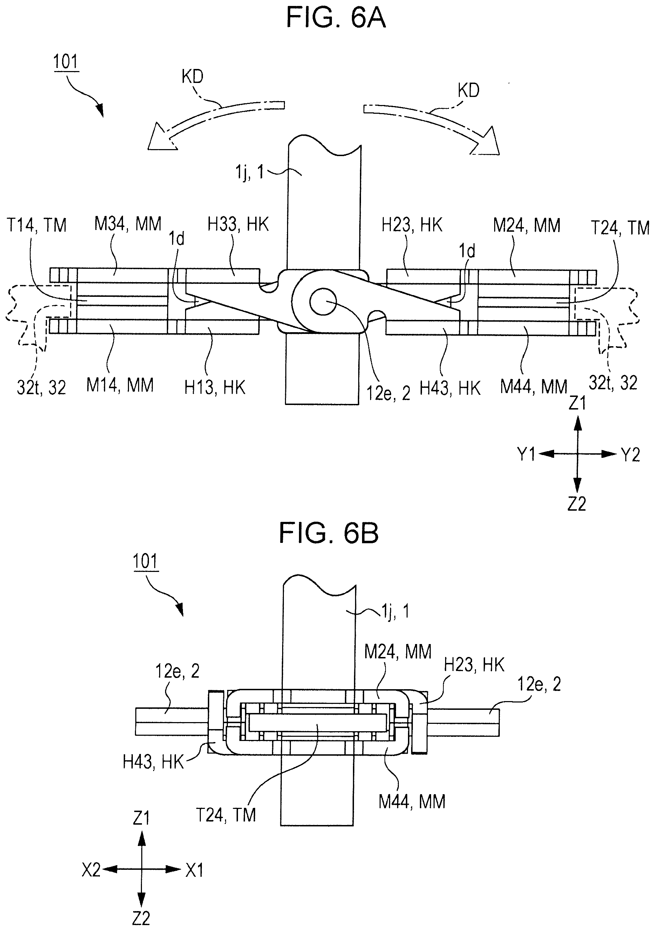

Next, the operation device 101 is described. Fig. 5 is an illustration describing the operation device 101 according to the first embodiment of the invention, Fig. 5 being a perspective view of a primary portion of the operation device 101. Figs. 6A and 6B are illustrations describing the operation device 101 according to the first embodiment of the invention, Fig. 6A being a front view from the X2 side shown in Fig. 5, Fig. 6B being a side view from the Y2 side shown in Fig. 5. Figs. 5, 6A, and 6B illustrate a case that the operation member 1 is located at the reference position P2, that is, at the reference position at which the tilting operation in the tilting direction KD is not performed.

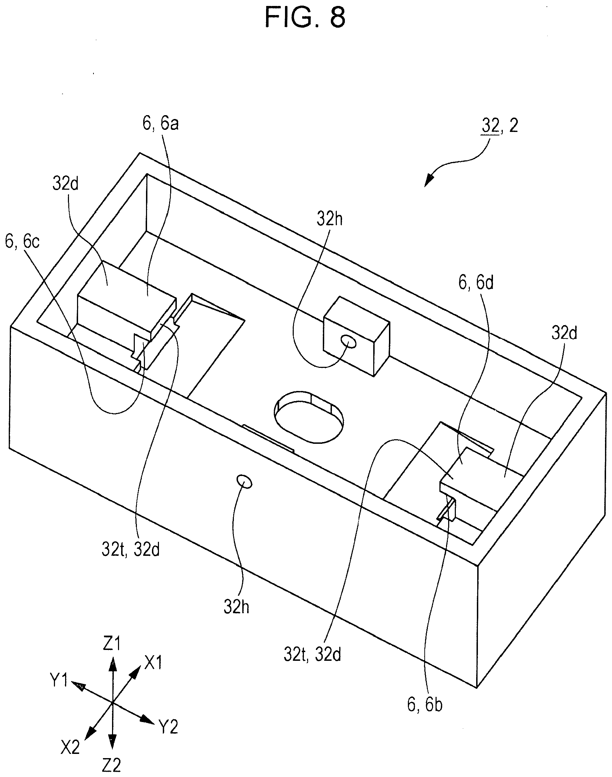

As shown in Figs. 5 to 6B, the operation device 101 according to the first embodiment of the invention includes the operation member 1 being able to make a tilting motion in response to an operation by the operator, the support body 2 (see Fig. 3) supporting the operation member 1 to be able to make the tilting motion, a plurality of movable members HK that make a tilting motion in the tilting direction KD (the Y direction shown in Fig. 6A) in accordance with the tilting motion of the operation member 1, a pair of movable magnetic bodies MM respectively provided at the movable members HK and facing each other, a counter magnetic body TM arranged between the pair of facing movable magnetic bodies MM, and a plurality of stopper portions 6 (see Figs. 8 to 10C, described later) that stop the tilting motion of the movable magnetic bodies MM. The operation device 101 allows the operation member 1 to make the tilting motion in the tilting direction KD (the Y1 direction and the Y2 direction shown in Figs. 4A and 4B) in response to the tilting operation by the operator.

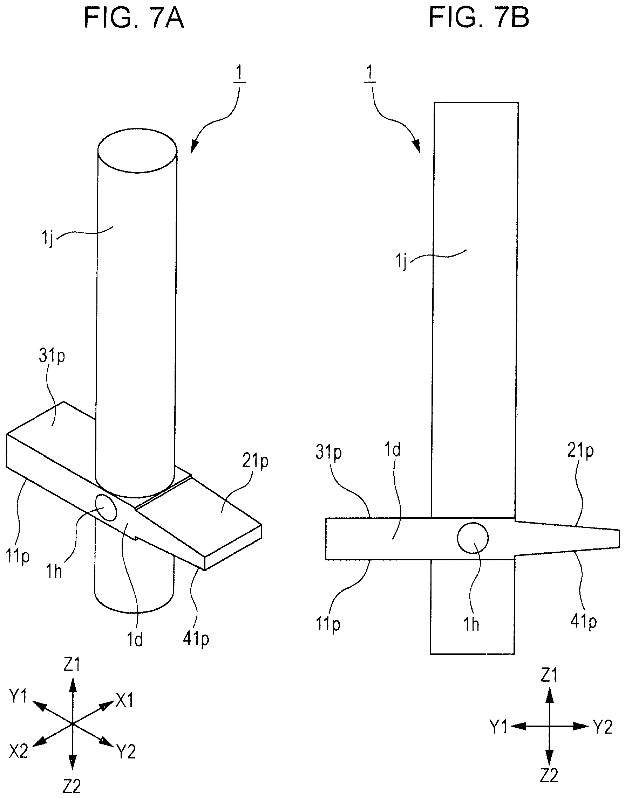

The operation member 1 of the operation device 101 is described. Figs. 7A and 7B are illustrations describing the operation member 1, Fig. 7A being a perspective view of the operation member 1, Fig. 7B being a front view of the operation member 1 when viewing Fig. 7A from the X2 side.

The operation member 1 is formed by molding a synthetic resin material such as polybutyleneterephtalate (PBT). As shown in Figs. 7A and 7B, the operation member 1 includes the columnar operation shaft 1j extending in the vertical direction (the Z direction in Fig. 5), and a base portion 1d provided at the other end side of the operation shaft 1j and expanding in a plane. The axis center of the operation shaft 1j penetrates through the plane. As described above, the shift knob 50N of the vehicle shift device 500 is arranged to cover the operation shaft 1j of the operation member 1. The synthetic resin material is used as the operation member 1; however, it is not limited thereto. For example, a metal material such as zinc (Zn) may be used.

As shown in Figs. 7A and 7B, the operation shaft 1j of the operation member 1 is formed in a columnar shape, and penetrates through the base portion 1d. Also, as shown in Figs. 2A and 2B, an upper portion (a portion exposed from the upper surface of the upper cover K1) of the operation shaft 1j is covered with the shift knob 50N, and is engaged with the shift knob 50N. A widely typically used engagement structure may be applied to the engagement structure between the operation shaft 1j and the shift knob 50N. Therefore, the detailed description is omitted.

As shown in Figs. 7A and 7B, the base portion 1d of the operation member 1 extends to the left and right (the Y1 direction and the Y2 direction shown in Figs. 7A and 7B) with the operation shaft 1j interposed therebetween. The base portion 1d has a through hole 1h at a center portion of the base portion 1d (the X direction shown in Fig. 7A) being orthogonal to an extension direction (the Y direction shown in Fig. 7A) of the base portion 1d. The tilting shaft 12e of the support body 2 is inserted through and fitted to the through hole 1h. The tilting shaft 12e allows the operation member 1 to make the tilting motion. The base portion 1d also makes the tilting motion in association with the tilting motion in the tilting direction KD (the Y direction shown in Figs. 7A and 7B) of the operation member 1.

Also, as shown in Fig. 6A, in the assembled state of the operation device 101, the base portion 1d is arranged between the plurality of movable members HK, and contacts the movable members HK when the base portion 1d rotates around the tilting shaft 12e as the axis center. As shown in Fig. 7B, the base portion 1d includes a first pressing portion 11p facing the movable member HK (a first movable member H13, described later) in a manner parallel thereto, and a second pressing portion 21p facing the movable member HK (a second movable member H23, described later) in a manner inclined thereto. The first pressing portion 11p and the second pressing portion 21p are arranged at both sides of the operation shaft 1j with the tilting shaft 12e interposed therebetween. Also, in the first embodiment of the invention, the base portion 1d includes a third pressing portion 31p facing the movable member HK (a third movable member H33, described later) in a manner parallel thereto, and a fourth pressing portion 41p facing the movable member HK (a fourth movable member H43, described later) in a manner inclined thereto. The third pressing portion 31p and the fourth pressing portion 41p are provided at both sides of the operation shaft 1j with the tilting shaft 12e interposed therebetween similarly to the first pressing portion 11p and the second pressing portion 21p.

Next, the support body 2 of the operation device 101 is described. Fig. 8 is an illustration describing the support body 2. In particular, Fig. 8 is an upper perspective view of the frame body 32 of the support body 2.

The support body 2 mainly includes the tilting shaft 12e (see Fig. 5) that allows the operation member 1 to make the tilting motion (the tilting motion in the tilting direction KD), and the frame body 32 (see Fig. 8). The tilting shaft 12e is inserted through the frame body 32. The frame body 32 rotatably supports the tilting shaft 12e.

The tilting shaft 12e of the support body 2 is formed of a soft magnetic material such as iron, and as shown in Fig. 5, the tilting shaft 12e is formed in a columnar shape. In the assembled state of the operation device 101, the tilting shaft 12e is inserted through the through hole 1h of the operation member 1 (the base portion 1d) and is fitted to the operation member 1, engages with the plurality of movable members HK, and supports the movable members HK so as to allow the movable members HK to make the tilting motion in the tilting direction KD (the Y direction shown in Fig. 5).

The frame body 32 of the support body 2 is formed by molding a synthetic resin material such as polybutyleneterephtalate (PBT). As show in Fig. 8, the frame body 32 has the open portions at the upper and lower surfaces being open, and is formed in a rectangular box-like shape. In the assembled state of the operation device 101, the base portion 1d of the operation member 1, the plurality of movable members HK, the plurality of movable magnetic bodies MM, and the plurality of counter magnetic bodies TM are housed in the housing portion of the frame body 32.

Also, as shown in Fig. 8, the frame body 32 has holes 32h formed respectively at facing long side walls. The tilting shaft 12e is inserted through the holes 32h (see Fig. 3), and hence the tilting shaft 12e is rotatably supported by the frame body 32. Accordingly, the operation member 1 can rotate in the tilting direction KD around the tilting shaft 12e as the axis center (rotation center), and the base portion 1d can also rotate around the tilting shaft 12e as the axis center.

Also, as shown in Fig. 8, the frame body 32 has protruding seat portions 32d at facing short side walls. Protruding portions 32t protrude from the seat portions 32d toward the inside of the housing portion of the frame body 32. In the assembled state of the operation device 101, although not specifically shown, each of the protruding portions 32t of the seat portions 32d are inserted into an area between the pair of movable magnetic bodies MM (see Fig. 6A).

The movable member HK and the movable magnetic body MM of the operation device 101 are described next. The movable member HK and the movable magnetic body MM of the operation device 101 according to the first embodiment of the invention are made of a soft magnetic material such as iron, and integrally formed as shown in Fig. 5. Accordingly, the number of parts of the operation device 101 can be decreased, and this portion can be decreased in thickness. In the first embodiment of the invention, the movable member HK and the movable magnetic body MM are preferably integrally formed; however, it is not limited thereto. The movable member HK and the movable magnetic body MM may be separately formed.

The movable members HK of the operation device 101 include the first movable member H13 arranged to face the first pressing portion 11p of the base portion 1d, the second movable member H23 arranged to face the second pressing portion 21p of the base portion 1d, the third movable member H33 arranged to face the third pressing portion 31p of the base portion 1d, and the fourth movable member H43 arranged to face the fourth pressing portion 41p of the base portion 1d. The plurality of movable members HK make the tilting motion in association with the tilting motion of the base portion 1d caused by the tilting operation of the operation member 1.

As shown in Fig. 6A, the first movable member H13 and the second movable member H23 of the movable members HK are provided with the tilting shaft 12e of the support body 2 interposed therebetween. First end sides of the first movable member H13 and the second movable member H23 are rotatably loosely fitted to the tilting shaft 12e, and hence the first movable member H13 and the second movable member H23 rotate around the tilting shaft 12e. When the tilting operation is performed on the operation member 1 in a first direction (the Y1 direction shown in Fig. 6A), the first pressing portion 11p of the base portion 1d that makes the tilting motion in the tilting operation direction of the base portion 1d (the tilting operation direction in the first direction) presses the first movable member H13 facing the first pressing portion 11p. When the tilting operation is further continued in the first direction, the second pressing portion 21p of the base portion 1d at the opposite side (the Y1 direction side shown in Fig. 6A) to the first pressing portion 11p side (the Y2 direction side shown in Fig. 6A) with respect to the tilting shaft 12e presses the second movable member H23 facing the second pressing portion 21p.

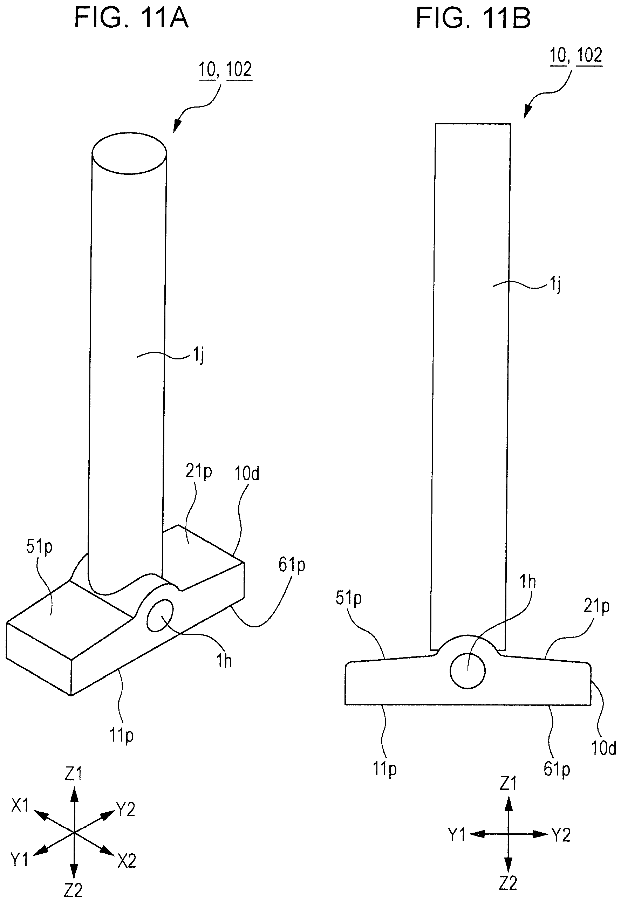

Also, as shown in Fig. 6A, the third movable member H33 and the fourth movable member H43 of the movable members HK are provided with the tilting shaft 12e of the support body 2 interposed therebetween. First end sides of the third movable member H33 and the fourth movable member H43 are rotatably loosely fitted to the tilting shaft 12e, and hence the third movable member H33 and the fourth movable member H43 rotate around the tilting shaft 12e. When the tilting operation is performed on the operation member 1 in a second direction (the Y2 direction shown in Fig. 6A), the third pressing portion 31p of the base portion 1d that makes the tilting motion in the tilting operation direction of the base portion 1d (the tilting operation direction in the second direction) presses the third movable member H33 facing the third pressing portion 31p. When the tilting operation is further continued in the second direction, the fourth pressing portion 41p of the base portion 1d at the opposite side (the Y1 direction side shown in Fig. 11B) to the third pressing portion 31p side (the Y2 direction side shown in Fig. 6A) with respect to the tilting shaft 12e presses the fourth movable member H43 facing the fourth pressing portion 41p.

The movable magnetic bodies MM of the operation device 101 each are made of a soft magnetic material such as iron. As shown in Fig. 5, the movable magnetic bodies MM include a first movable magnetic body M14 provided at (integrated with) the first movable member H13, a second movable magnetic body M24 provided at (integrated with) the second movable member H23, a third movable magnetic body M34 provided at (integrated with) the third movable member H33, and a fourth movable magnetic body M44 provided at (integrated with) the fourth movable member H43. The first movable magnetic body M14 and the third movable magnetic body M34 form a pair and the counter magnetic body TM (a first counter magnetic body T14 described later) is interposed therebetween. The second movable magnetic body M24 and the fourth movable magnetic body M44 form a pair and the counter magnetic body TM (a second counter magnetic body T24 described later) is interposed therebetween. When the operation member 1 is at the reference position, the movable magnetic bodies MM in each pair are arranged closely to each other and attracted to each other. Fig. 6B illustrates that a predetermined gap is seemingly provided between the movable magnetic body MM and the counter magnetic body TM. However, a cushioning member (not shown) is provided in this gap at the movable magnetic body MM side or the counter magnetic body TM side to prevent contact sound that is generated when the movable magnetic body MM directly contacts the counter magnetic body TM.

Also, as shown in Fig. 5, the movable magnetic bodies MM (the first movable magnetic body M14, the second movable magnetic body M24, the third movable magnetic body M34, and the fourth movable magnetic body M44) each entirely have a rectangular plate-like shape, and both end sides of each of the pair of movable magnetic bodies MM may be bent so that end surfaces of one of the pair of movable magnetic bodies MM face end surfaces of the other. Accordingly, the pair of movable magnetic bodies MM encloses the counter magnetic body TM (the permanent magnet). The magnetic flux generated by the counter magnetic body TM (the permanent magnet) is trapped between the pair of movable magnetic bodies MM. Accordingly, the attraction forces between the pair of movable magnetic bodies MM can be increased.

Next, the counter magnetic bodies TM of the operation device 101 are described. The counter magnetic bodies TM each are made of a rectangular plate-shaped permanent magnet. As shown in Fig. 6A, the counter magnetic bodies TM include the first counter magnetic body T14 arranged at the first movable magnetic body M14 (the third movable magnetic body M34) side and the second counter magnetic body T24 arranged at the second movable magnetic body M24 (the fourth movable magnetic body M44) side with the base portion 1d of the operation member 1 interposed therebetween.

In the first embodiment of the invention, the first counter magnetic body T14 is fixed to the first movable magnetic body M14, and the second counter magnetic body T24 is fixed to the fourth movable magnetic body M44. Accordingly, the first counter magnetic body T14 makes the tilting motion by the tilting motion of the first movable magnetic body M14, and the second counter magnetic body T24 makes the tilting motion by the tilting motion of the fourth movable magnetic body M44.

The stopper portion 6 of the operation device 101 is described. The stopper portion 6 has a function of stopping the tilting motion of the other movable magnetic body MM among the pair of movable magnetic bodies MM when the operation member 1 is tilted in the tilting direction KD from the reference position (the reference position P2) and is located at the next one of the plurality of positions. That is, in the first embodiment of the invention, the stopper portion 6 is provided at the protruding portion 32t of the seat portion 32d provided at the frame body 32 of the support body 2.

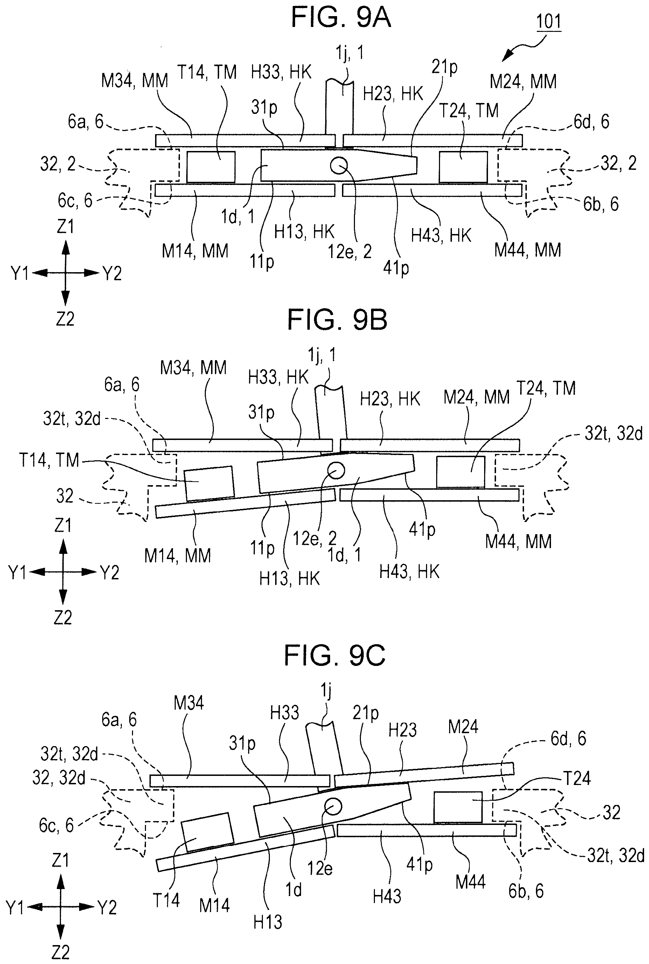

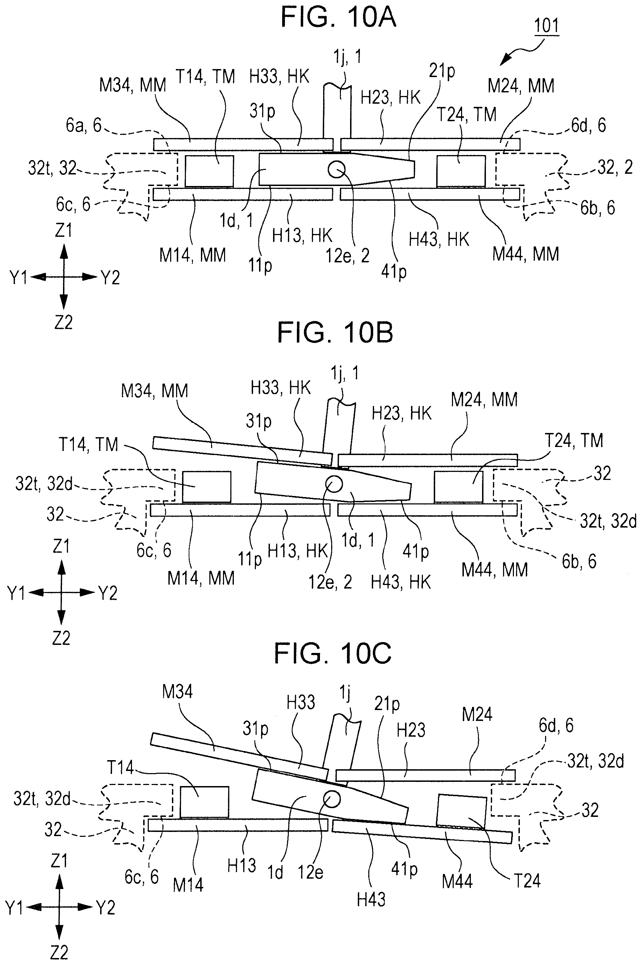

The stopper portion 6 is described below in detail by describing the motion in the tilting direction KD in the operation device 101 with reference to schematic illustrations shown in Figs. 6A, and 9A to 10C. Also, for the motion in the tilting direction KD, the motion made by the tilting operation by the operator is described in detail while the reference position P2 serves as a reference position (see Fig. 4B). Figs. 9A to 9C are schematic illustrations describing a motion in the operation device 101 according to the first embodiment of the invention, Fig. 9A being an illustration of a state at a reference position, Fig. 9B being an illustration of a tilting state in a first direction (the Y1 direction shown in Figs. 9A to 9C), Fig. 9C being an illustration of a tilting state in the first direction further from Fig. 9B. Figs. 10A to 10C are schematic illustrations describing a motion in the operation device 101 according to the first embodiment of the invention, Fig. 10A being an illustration of a state at the same reference position as that of Fig. 9A, Fig. 10B being an illustration of a tilting state in a second direction (the Y2 direction shown in Figs. 10A to 10C), Fig. 10C being an illustration of a tilting state in the second direction further from Fig. 10B.

The tilting motion in the first direction (the Y1 direction shown in Figs. 9A to 9C) of the operation member 1 in the tilting direction KD is described first. When the operation member 1 is at the reference position of the reference position P2, as shown in Fig. 6A, the base portion 1d of the operation member 1 is kept horizontal to the Y direction. The four movable members HK (the first movable member H13, the second movable member H23, the third movable member H33, and the fourth movable member H43) facing the base portion 1d are also kept horizontal. The pair of the first movable magnetic body M14 and the third movable magnetic body M34 are closely arranged to face each other with the first counter magnetic body T14 interposed therebetween. The pair of the second movable magnetic body M24 and the fourth movable magnetic body M44 are closely arranged to face each other with the second counter magnetic body T24 interposed therebetween. The first to fourth movable magnetic bodies M14 to M44 are respectively provided at (integrated with) the four movable members HK. Accordingly, when the operation member 1 is at the reference position (the reference position P2), since every pair of movable magnetic bodies MM is in the attracted state with the counter magnetic body TM interposed therebetween, rattling is not generated at the operation member 1.

Then, when the operator performs the tilting operation on the operation member 1 in the first direction (the Y1 direction shown in Fig. 6A) from the reference position (the reference position P2) shown in Fig. 9A, the operation member 1 is rotated around the tilting shaft 12e as the rotation center, the first pressing portion 11p (see Fig. 7B) of the base portion 1d at the tilting operation side (the Y1 direction side shown in Fig. 9B) presses the facing first movable member H13, and the first movable member H13 is rotated downward. The first movable magnetic body M14 provided at the first movable member H13 is also rotated and makes the tilting motion in the first direction.

The third movable magnetic body M34 being the other one forming the pair with the first movable magnetic body M14 is strongly attracted to the first counter magnetic body T14 through the cushioning member. However, the tilting motion in the first direction of the third movable magnetic body M34 is stopped by the protruding portion 32t of the seat portion 32d provided at the frame body 32. As shown in Fig. 9B, the first movable magnetic body M14 is separated from the third movable magnetic body M34, and the attracted state between the first movable magnetic body M14 and the third movable magnetic body M34 is changed from the strongly attracted state to the weakly attracted state. At this time, the operation member 1 is moved from the reference position P2 to the front first position S21 (see Fig. 4B), and the operator can obtain a tactile feel (a click feel) at the movement from the reference position P2 to the front first position S21. In the first embodiment of the invention, the protruding portion 32t of the seat portion 32d provided at the first direction side, or more particularly, a surface of the protruding portion 32t facing the third movable magnetic body M34 stops the tilting motion of the third movable magnetic body M34. This surface serves as the stopper portion 6 (for easier understanding, referred to as stopper portion 6a).

Further, when the operator continues the tilting operation from the position (the front first position S21) shown in Fig. 9B in the first direction (the Y1 direction), the operation member 1 is further rotated, the second pressing portion 21p (see Fig. 7B) of the base portion 1d located at the opposite side (the Y2 direction side shown in Fig. 9B) to the tilting operation side presses the facing second movable member H23, and the second movable member H23 is rotated upward. The second movable magnetic body M24 provided at the second movable member H23 is also rotated and makes the tilting motion in the first direction.

The fourth movable magnetic body M44 being the other one forming the pair with the second movable magnetic body M24 is strongly attracted to the second counter magnetic body T24 through the cushioning member. However, the tilting motion in the first direction of the fourth movable magnetic body M44 is stopped by the protruding portion 32t of the seat portion 32d provided at the frame body 32. As shown in Fig. 9C, the second movable magnetic body M24 is separated from the fourth movable magnetic body M44, and the attracted state between the second movable magnetic body M24 and the fourth movable magnetic body M44 is changed from the strongly attracted state to the weakly attracted state. At this time, the operation member 1 is moved from the front first position S21 to the front second position S22 (see Fig. 4B), and the operator can obtain a tactile feel (a click feel) at the movement from the front first position S21 to the front second position S22. In the first embodiment of the invention, the protruding portion 32t of the seat portion 32d provided at the second direction side, or more particularly, a surface of the protruding portion 32t facing the fourth movable magnetic body M44 stops the tilting motion of the fourth movable magnetic body M44. This surface serves as the stopper portion 6 (for easier understanding, referred to as stopper portion 6b).

In the operation device 101 according to the first embodiment of the invention configured as described above, if the operation member 1 is tilted from the reference position (the reference position P2) and located at the plurality of positions, the operation device 101 has a plurality of stopper portions 6 respectively corresponding to the plurality of positions as shown in Figs. 9A to 9C. To be specific, the stopper portion 6a is provided to correspond to the front first position S21 shown in Fig. 4B, and the stopper portion 6b is provided to correspond to the front second position S22 shown in Fig. 4B.

Accordingly, for example, at change of the position from the reference position (the reference position P2) to the next position (the front first position S21), and from the next position (the front first position S21) to the further next position (the front second position S22), the tilting motion in the first direction of one of the movable magnetic bodies MM is continued, and the tilting motion of the other movable magnetic body MM is stopped by the corresponding stopper portion 6 (6a, 6b). Hence, at each position, the pair of movable magnetic bodies MM are detached and separated from each other. The change from the strongly attracted state to the weakly attracted state can give the operator a tactile feel. Therefore, as compared with the related art, since a sliding mechanism is not provided at the portion that generates a tactile feel, the operation device 101 with high durability can be provided.

Further, since the pair of movable magnetic bodies MM are arranged with the permanent magnet (the counter magnetic body TM) interposed therebetween and are separated from each other, a tactile feel in a non-contact manner can be obtained by using the minimum (single) permanent magnet. Accordingly, the number of expensive permanent magnets can be minimized, and hence the operation device 101 can be fabricated at low cost.

Also, the operation device 101 according to the first embodiment of the invention is specifically configured such that when the tilting operation is performed on the operation member 1 in the first direction (the Y1 direction shown in Figs. 9A to 9C), the first pressing portion 11p of the base portion 1d presses the first movable member H13, the first movable magnetic body M14 provided at the first movable member H13 makes the tilting motion, and the stopper portion 6 (6a) stops the tilting motion of the third movable magnetic body M34 provided at the third movable member H33. When the tilting operation is further continued in the first direction (the tilting operation direction), the second pressing portion 21p presses the second movable member H23, the second movable magnetic body M24 provided at the second movable member H23 makes the tilting motion, and the stopper portion 6 (6b) stops the tilting motion of the fourth movable magnetic body M44 provided at the fourth movable member H43. Accordingly, the first movable magnetic body M14 making the tilting motion is easily separated from the third movable magnetic body M34 stopped by the stopper portion 6a. When the tilting operation is further continued in the first direction, the second movable magnetic body M24 located at the opposite side with respect to the tilting shaft 12e and making the tilting motion is easily separated from the fourth movable magnetic body M44 stopped by the stopper portion 6b. Accordingly, the pair of the first movable magnetic body M14 and the third movable magnetic body M34 can be easily separated from each other, and the pair of the second movable magnetic body M24 and the fourth movable magnetic body M44 can be easily separated from each other depending on each of the positions (the front first position S21 and the front second position S22). Therefore, the operation device 101 having a tactile feel can be easily fabricated.

The operation device 101 according to the first embodiment of the invention has a configuration for the tilting operation in the second direction (the Y2 direction shown in Fig. 6A) of the operation member 1, the configuration which is similar to the configuration of the tilting operation in the first direction of the operation member 1. The tilting motion in the second direction (the Y2 direction shown in Figs. 10A to 10C) of the operation member 1 in the tilting direction KD is also described.

When the operator performs the tilting operation on the operation member 1 in the second direction (the Y2 direction shown in Fig. 6A) from the reference position (the reference position P2) shown in Fig. 10A, the operation member 1 is rotated around the tilting shaft 12e as the rotation center, the third pressing portion 31p (see Fig. 7B) of the base portion 1d at the opposite side (the Y1 direction side shown in Fig. 10B) to the tilting operation presses the facing third movable member H33, and the third movable member H33 is rotated upward. The third movable magnetic body M34 provided at the third movable member H33 is also rotated and makes the tilting motion in the second direction.

The first movable magnetic body M14 being the other one forming the pair with the third movable magnetic body M34 is strongly attracted to the first counter magnetic body T14 through the cushioning member. However, the tilting motion in the second direction of the first movable magnetic body M14 is stopped by the protruding portion 32t of the seat portion 32d provided at the frame body 32. As shown in Fig. 10B, the first movable magnetic body M14 is separated from the third movable magnetic body M34, and the attracted state between the first movable magnetic body M14 and the third movable magnetic body M34 is changed from the strongly attracted state to the weakly attracted state. At this time, the operation member 1 is moved from the reference position P2 to the rear first position S23 (see Fig. 4B), and the operator can obtain a tactile feel (a click feel) at the movement from the reference position P2 to the rear first position S23. In the first embodiment of the invention, the protruding portion 32t of the seat portion 32d provided at the first direction side, or more particularly, a surface of the protruding portion 32t facing the first movable magnetic body M14 stops the tilting motion of the first movable magnetic body M14. This surface serves as the stopper portion 6 (for easier understanding, referred to as stopper portion 6c).

Further, when the operator continues the tilting operation from the position (the rear first position S23) shown in Fig. 10B in the second direction (the Y2 direction), the operation member 1 is further rotated, the fourth pressing portion 41p (see Fig. 7B) of the base portion 1d located at the tilting operation side (the Y2 direction side shown in Fig. 10B) presses the facing fourth movable member H43, and the fourth movable member H43 is rotated downward. The fourth movable magnetic body M44 provided at the fourth movable member H43 is also rotated and makes the tilting motion in the second direction.

The second movable magnetic body M24 being the other one forming the pair with the fourth movable magnetic body M44 is strongly attracted to the second counter magnetic body T24 through the cushioning member. However, the tilting motion in the second direction of the second movable magnetic body M24 is stopped by the protruding portion 32t of the seat portion 32d provided at the frame body 32. As shown in Fig. 10C, the second movable magnetic body M24 is separated from the fourth movable magnetic body M44, and the attracted state between the second movable magnetic body M24 and the fourth movable magnetic body M44 is changed from the strongly attracted state to the weakly attracted state. At this time, the operation member 1 is moved from the rear first position S23 to the rear second position S24 (see Fig. 4B), and the operator can obtain a tactile feel (a click feel) at the movement from the rear first position S23 to the rear second position S24. In the first embodiment of the invention, the protruding portion 32t of the seat portion 32d provided at the second direction side, or more particularly, a surface of the protruding portion 32t facing the second movable magnetic body M24 stops the tilting motion of the second movable magnetic body M24. This surface serves as the stopper portion 6 (for easier understanding, referred to as stopper portion 6d).

The operation device 101 according to the first embodiment of the invention configured as described above is specifically configured such that when the tilting operation is performed on the operation member 1 in the second direction (the Y2 direction shown in Figs. 10A to 10C), the third pressing portion 31p of the base portion 1d presses the third movable member H33, the third movable magnetic body M34 provided at the third movable member H33 makes the tilting motion, and the stopper portion 6 (6c) stops the tilting motion of the first movable magnetic body M14 provided at the first movable member H13. When the tilting operation is further continued in the second direction (the tilting operation direction), the fourth pressing portion 41p presses the fourth movable member H43, the fourth movable magnetic body M44 provided at the fourth movable member H43 makes the tilting motion, and the stopper portion 6 (6d) stops the tilting motion of the second movable magnetic body M24 provided at the second movable member H23. Accordingly, the third movable magnetic body M34 making the tilting motion is easily separated from the first movable magnetic body M14 stopped by the stopper portion 6c. When the tilting operation is further continued in the second direction, the fourth movable magnetic body M44 located at the opposite side with respect to the tilting shaft 12e and making the tilting motion is easily separated from the second movable magnetic body M24 stopped by the stopper portion 6d. Accordingly, the pair of the first movable magnetic body M14 and the third movable magnetic body M34 can be easily separated from each other, and the pair of the second movable magnetic body M24 and the fourth movable magnetic body M44 can be easily separated from each other depending on each of the positions (the rear first position S23 and the rear second position S24). Therefore, the operation device 101 having a tactile feel can be easily fabricated.

Also, in the first embodiment of the invention, the operation member 1 is tilted in the Y1 direction or the Y2 direction, and as shown in Figs. 9B and 9C, or Figs. 10B and 10C, the pair of movable magnetic bodies MM (the first movable magnetic body M14 and the third movable magnetic body M34, or the second movable magnetic body M24 and the fourth movable magnetic body M44) may be arranged at positions at which the attraction forces acting therebetween are not lost when the pair of the movable magnetic bodies MM are separated from each other. Accordingly, if the force of the tilting operation by the operator is removed at each of the positions (the front first position S21, the front second position S22, the rear first position S23, and the rear second position S24), the pair of movable magnetic bodies MM are attracted to each other by their attraction forces. Accordingly, the operation member 1 can be automatically returned to the reference position (the reference position P2) without use of a returning member for automatic return.

Instead of the above-described arrangement positional relationship between the plurality of movable magnetic bodies MM, the plurality of movable magnetic bodies MM may be arranged by an arrangement positional relationship described below. That is, after the first movable magnetic body M14 and the third movable magnetic body M34 are separated from each other and before the second movable magnetic body M24 and the fourth movable magnetic body M44 are separated from each other, the pair of the first movable magnetic body M14 and the third movable magnetic body M34 may be arranged at positions at which the attraction forces acting therebetween are not lost. The pair of the second movable magnetic body M24 and the fourth movable magnetic body M44 may be preferably arranged at positions at which the attraction forces acting therebetween are not lost even though the attraction forces acting between the first movable magnetic body M14 and the third movable magnetic body M34 are lost when the second movable magnetic body M24 and the fourth movable magnetic body M44 are separated from each other. Accordingly, when the force of the tilting operation by the operator is removed, the attraction between the second movable magnetic body M24 and the fourth movable magnetic body M44 is provided, and then the attraction between the first movable magnetic body M14 and the third movable magnetic body M34 is provided. Hence, the operation member 1 can be automatically returned to the reference position without use of a returning member for automatic return.

As described above, the operation device 101 according to the first embodiment of the invention can be preferably applied to the vehicle shift device 500 having the shift arrangement (the shift pattern) shown in Fig. 4A. That is, since the vehicle shift device 500 according to the first embodiment of the invention has the shift arrangement (the shift pattern) that allows an operation to each of the positions (the front first position S21, the front second position S22, the reference position P2, the rear first position S23, and the rear second position S24) to be performed, the operation device 101 can be preferably applied to this vehicle shift device 500. Accordingly, the vehicle shift device 500 can perform a shift operation having a tactile feel. In addition, since the portion that generates a tactile feel does not include a sliding mechanism unlike the related art, the vehicle shift device 500 has high durability.

Further, when the operation member 1 of the operation device 101 is at the reference position, every pair of movable magnetic bodies MM is in the attracted state with the counter magnetic body TM interposed therebetween. Hence, when the shift knob 50N engaged with the operation member 1 is at the reference position, rattling is not generated at the shift knob 50N even during traveling of the vehicle. The operation device is further preferable for the vehicle shift device 500.

### Second Embodiment

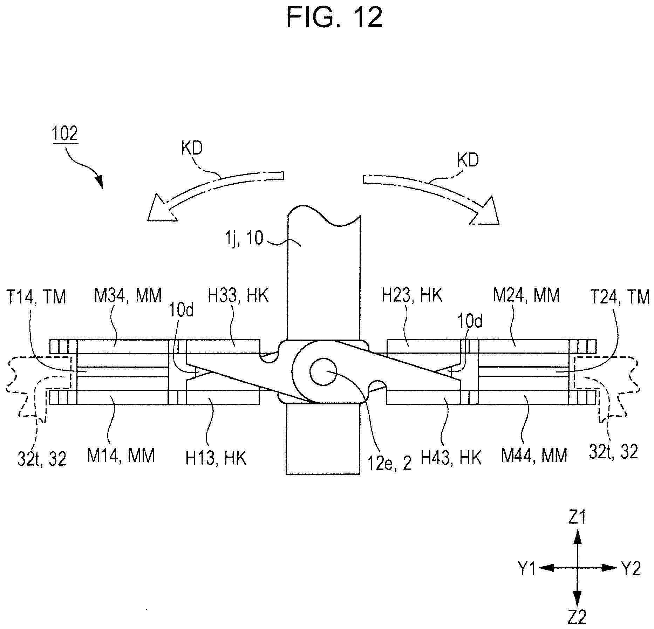

In a second embodiment of the invention, an operation device 102 is described. The operation device 102 according to the second embodiment differs from the operation device 101 according to the first embodiment only for the shape of an operation member 10, and the other components are the same. Therefore, only the operation member 10, and a tilting motion of the operation member 10 in the tilting direction KD are described, and the same configuration as that of the first embodiment is applied with the same reference sign, and its detailed description is omitted. Figs. 11A and 11B are illustrations describing the operation device 102 according to the second embodiment of the invention, Fig. 11A being a perspective view of the operation member 10, Fig. 11B being a side view of the operation member 10 when viewing Fig. 11A from the X2 side. Fig. 12 is a side view compared with Fig. 6A showing the primary portion of the operation device 101 according to the first embodiment. In the second embodiment of the invention, the shape of the operation member 10 is different. Hence, when the operation member 10 makes the tilting motion, the movable member HK to be pressed is different. Even the movable member HK and the movable magnetic body MM at the same positions as those in Fig. 6A represent a movable member HK and a movable magnetic body MM corresponding to pressing by the operation member 10.

The operation member 10 of the operation device 102 according to the second embodiment of the invention is formed by molding a synthetic resin material such as polybutyleneterephtalate (PBT). As shown in Figs. 11A and 11B, the operation member 10 includes the columnar operation shaft 1j extending in the vertical direction (the Z direction in Figs. 11A and 11B), and a base portion 10d provided at the other end side of the operation shaft 1j and expanding in a plane. The axis center of the operation shaft 1j penetrates through the plane. The shift knob 50N of the vehicle shift device 500 is arranged to cover the operation shaft 1j of the operation member 10. The synthetic resin material is used as the operation member 10; however, it is not limited thereto. For example, a metal material such as zinc (Zn) may be used.

As shown in Figs. 11A and 11B, the operation shaft 1j of the operation member 10 is formed in the columnar shape, and extends from the one surface of the base portion 10d. Also, the upper portion (the portion exposed from the upper surface of the upper cover K1) of the operation shaft 1j is covered with the shift knob 50N, and is engaged with the shift knob 50N. A widely typically used engagement structure may be applied to the engagement structure between the operation shaft 1j and the shift knob 50N. Therefore, the detailed description is omitted.

As shown in Figs. 11A and 11B, the base portion 10d of the operation member 10 extends to the left and right (the Y1 direction and Y2 direction shown in Figs. 11A and 11B) with the operation shaft 1j interposed therebetween. The base portion 10d has the through hole 1h at a center portion of the base portion 10d (the X direction shown in Figs. 11A and 11B) being orthogonal to an extension direction (the Y direction shown in Figs. 11A and 11B) of the base portion 10d. The tilting shaft 12e of the support body 2 is inserted through and fitted to the through hole 1h. The tilting shaft 12e allows the operation member 10 to make the tilting motion. The base portion 10d also makes the tilting motion in association with the tilting motion in the tilting direction KD (the Y direction shown in Fig. 12) of the operation member 10.

Also, as shown in Fig. 12, in the assembled state of the operation device 102, the base portion 10d is arranged between the plurality of movable members HK, and contacts one of the movable members HK when the base portion 10d rotates around the tilting shaft 12e as the axis center. As shown in Fig. 11B, the base portion 10d includes the first pressing portion 11p facing the movable member HK (the first movable member H13) in a manner parallel thereto, and the second pressing portion 21p facing the movable member HK (the second movable member H23) in a manner inclined thereto. The first pressing portion 11p and the second pressing portion 21p are arranged at both sides of the operation shaft 1j with the tilting shaft 12e interposed therebetween. Also, in the second embodiment of the invention, the base portion 1d includes a fifth pressing portion 51p facing the movable member HK (the third movable member H33) in a manner inclined thereto, and a sixth pressing portion 61p facing the movable member HK (the fourth movable member H43) in a manner parallel thereto. The fifth pressing portion 51p and the sixth pressing portion 61p are arranged at both sides of the operation shaft 1j with the tilting shaft 12e interposed therebetween.

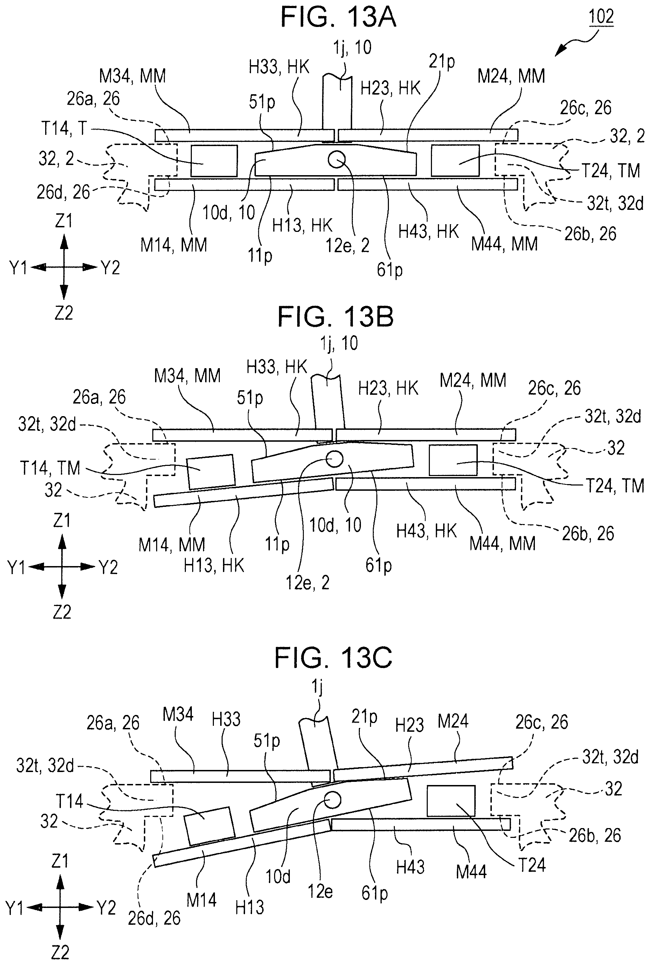

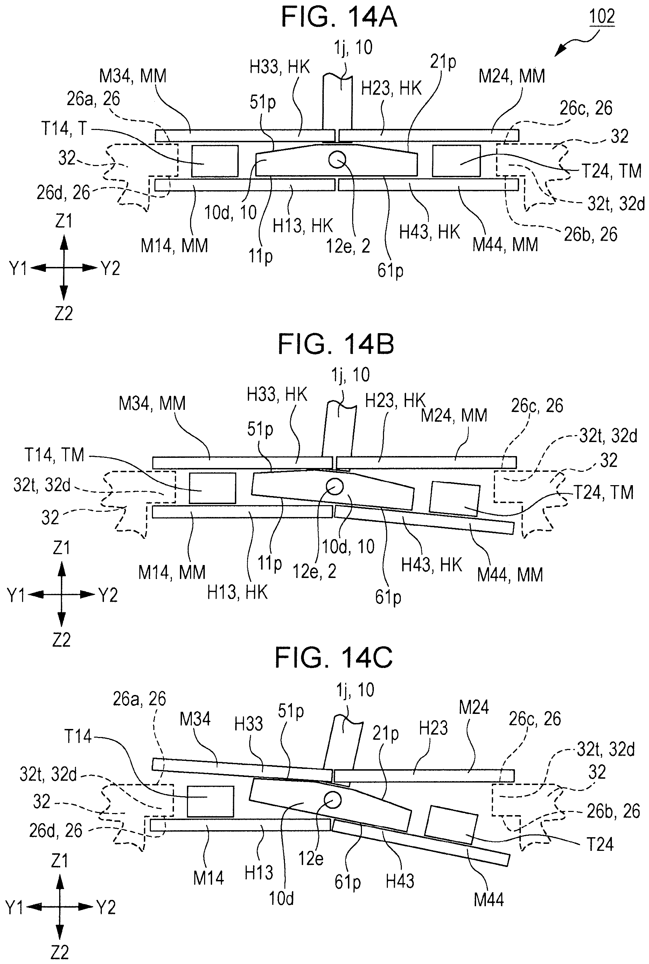

The motion in the tilting direction KD in the operation device 102 is described next with reference to Figs. 12 to 14C. Also, for the motion in the tilting direction KD, the motion made by the tilting operation by the operator is described in detail while the reference position P2 serves as the reference position (see Fig. 4B). Figs. 13A to 13C are schematic illustrations describing a motion in the operation device 102 according to the second embodiment of the invention, Fig. 13A being an illustration of a state at the reference position, Fig. 13B being an illustration of a tilting state in the first direction, Fig. 13C being an illustration of a tilting state in the first direction further from Fig. 13B. Figs. 14A to 14C are schematic illustrations describing a motion in the operation device 102 according to the second embodiment of the invention, Fig. 14A being an illustration of a state at a reference position, Fig. 14B being an illustration of a tilting state in a second direction, Fig. 14C being an illustration of a tilting state in the second direction further from Fig. 14B.

The tilting motion in the first direction (the Y1 direction shown in Fig. 12) of the operation member 10 in the tilting direction KD is described first. When the operation member 10 is at the reference position of the reference position P2, as shown in Fig. 13A, the base portion 10d of the operation member 10 is kept horizontal with respect to the Y direction. The four movable members HK (the first movable member H13, the second movable member H23, the third movable member H33, and the fourth movable member H43) facing the base portion 10d are also kept horizontal. The pair of the first movable magnetic body M14 and the third movable magnetic body M34 are closely arranged to face each other with the first counter magnetic body T14 interposed therebetween. The pair of the second movable magnetic body M24 and the fourth movable magnetic body M44 are closely arranged to face each other with the second counter magnetic body T24 interposed therebetween. The first to fourth movable magnetic bodies M14 to M44 are respectively provided at (integrated with) the four movable members HK. Accordingly, when the operation member 10 is at the reference position (the reference position P2), since every pair of movable magnetic bodies MM is in the attracted state with the counter magnetic body TM interposed therebetween, rattling is not generated at the operation member 10.

Then, when the operator performs the tilting operation on the operation member 10 in the first direction (the Y1 direction shown in Figs. 13A to 13C) from the reference position (the reference position P2) shown in Fig. 13A, the operation member 10 is rotated around the tilting shaft 12e as the rotation center, the first pressing portion 11p (see Fig. 11B) of the base portion 10d at the tilting operation side (the Y1 direction side shown in Fig. 13B) presses the facing first movable member H13, and the first movable member H13 is rotated downward. The first movable magnetic body M14 provided at the first movable member H13 is also rotated and makes the tilting motion in the first direction.

The third movable magnetic body M34 being the other one forming the pair with the first movable magnetic body M14 is strongly attracted to the first counter magnetic body T14 through the cushioning member. However, the tilting motion in the first direction of the third movable magnetic body M34 is stopped by the protruding portion 32t of the seat portion 32d provided at the frame body 32. As shown in Fig. 13B, the first movable magnetic body M14 is separated from the third movable magnetic body M34, and the attracted state between the first movable magnetic body M14 and the third movable magnetic body M34 is changed from the strongly attracted state to the weakly attracted state. At this time, the operation member 10 is moved from the reference position P2 to the front first position S21 (see Fig. 4B), and the operator can obtain a tactile feel (a click feel) at the movement from the reference position P2 to the front first position S21. In the second embodiment of the invention, the protruding portion 32t of the seat portion 32d provided at the first direction side, or more particularly, a surface of the protruding portion 32t facing the third movable magnetic body M34 stops the tilting motion of the third movable magnetic body M34. This surface serves as the stopper portion 26 (for easier understanding, referred to as stopper portion 26a).

Further, when the operator continues the tilting operation from the position (the front first position S21) shown in Fig. 13B in the first direction (the Y1 direction), the operation member 10 is further rotated, the second pressing portion 21p (see Fig. 11B) of the base portion 10d located at the opposite side (the Y2 direction side shown in Fig. 13B) to the tilting operation side presses the facing second movable member H23, and the second movable member H23 is rotated upward. The second movable magnetic body M24 provided at the second movable member H23 is also rotated and makes the tilting motion in the first direction.

The fourth movable magnetic body M44 being the other one forming the pair with the second movable magnetic body M24 is strongly attracted to the second counter magnetic body T24 through the cushioning member. However, the tilting motion in the first direction of the fourth movable magnetic body M44 is stopped by the protruding portion 32t of the seat portion 32d provided at the frame body 32. As shown in Fig. 13C, the second movable magnetic body M24 is separated from the fourth movable magnetic body M44, and the attracted state between the second movable magnetic body M24 and the fourth movable magnetic body M44 is changed from the strongly attracted state to the weakly attracted state. At this time, the operation member 10 is moved from the front first position S21 to the front second position S22 (see Fig. 4B), and the operator can obtain a tactile feel (a click feel) at the movement from the front first position S21 to the front second position S22. In the second embodiment of the invention, the protruding portion 32t of the seat portion 32d provided at the second direction side, or more particularly, a surface of the protruding portion 32t facing the fourth movable magnetic body M44 stops the tilting motion of the fourth movable magnetic body M44. This surface serves as the stopper portion 26 (for easier understanding, referred to as stopper portion 26b).

In the operation device 102 according to the second embodiment of the invention configured as described above, if the operation member 10 is tilted from the reference position (the reference position P2) and located at the plurality of positions, the operation device 10 has a plurality of stopper portions 26 respectively corresponding to the plurality of positions as shown in Figs. 13A to 13C. To be specific, the stopper portion 26a is provided to correspond to the front first position S21 shown in Fig. 4B, and the stopper portion 26b is provided to correspond to the front second position S22 shown in Fig. 4B.

Accordingly, for example, at change of the position from the reference position (the reference position P2) to the next position (the front first position S21), and from the next position (the front first position S21) to the further next position (the front second position S22), the tilting motion in the first direction of one of the movable magnetic bodies MM is continued, and the tilting motion of the other movable magnetic body MM is stopped by the corresponding stopper portion 26 (26a, 26b). Hence, at each position, the pair of movable magnetic bodies MM are detached and separated from each other. The change from the strongly attracted state to the weakly attracted state can give the operator a tactile feel. Therefore, as compared with the related art, since a sliding mechanism is not provided at the portion that generates a tactile feel, the operation device 102 with high durability can be provided.

Further, since the pair of movable magnetic bodies MM are arranged with the permanent magnet (the counter magnetic body TM) interposed therebetween and are separated from each other, a tactile feel in a non-contact manner can be obtained by using the minimum (single) permanent magnet. Accordingly, the number of expensive permanent magnets can be minimized, and hence the operation device 102 can be fabricated at low cost.

Also, since the movable member HK may be made of a soft magnetic material, and the movable member HK and the movable magnetic body MM may be integrally formed, the number of parts of the operation device 102 can be decreased, and this portion can be decreased in thickness.

Also, the operation device 102 according to the second embodiment of the invention is specifically configured such that when the tilting operation is performed on the operation member 10 in the first direction (the Y1 direction shown in Figs. 13A to 13C), the first pressing portion 11p of the base portion 10d presses the first movable member H13, the first movable magnetic body M14 provided at the first movable member H13 makes the tilting motion, and the stopper portion 26 (26a) stops the tilting motion of the third movable magnetic body M34 provided at the third movable member H33. When the tilting operation is further continued in the first direction (the tilting operation direction), the second pressing portion 21p presses the second movable member H23, the second movable magnetic body M24 provided at the second movable member H23 makes the tilting motion, and the stopper portion 26 (26b) stops the tilting motion of the fourth movable magnetic body M44 provided at the fourth movable member H43. Accordingly, the first movable magnetic body M14 making the tilting motion is easily separated from the third movable magnetic body M34 stopped by the stopper portion 26a. When the tilting operation is further continued in the first direction, the second movable magnetic body M24 located at the opposite side with respect to the tilting shaft 12e and making the tilting motion is easily separated from the fourth movable magnetic body M44 stopped by the stopper portion 26b. Accordingly, the pair of the first movable magnetic body M14 and the third movable magnetic body M34 can be easily separated from each other, and the pair of the second movable magnetic body M24 and the fourth movable magnetic body M44 can be easily separated from each other depending on each of the positions (the front first position S21 and the front second position S22). Therefore, the operation device 102 having a tactile feel can be easily fabricated.

The operation device 102 according to the second embodiment of the invention has a configuration for the tilting operation in the second direction (the Y2 direction shown in Fig. 12) of the operation member 10, the configuration which is similar to the configuration of the tilting operation in the first direction of the operation member 10. The tilting motion in the second direction (the Y2 direction shown in Figs. 14A to 14C) of the operation member 10 in the tilting direction KD is also described.

When the operator performs the tilting operation on the operation member 10 in the second direction (the Y2 direction shown in Fig. 12) from the reference position (the reference position P2) shown in Fig. 14A, the operation member 10 is rotated around the tilting shaft 12e as the rotation center, the sixth pressing portion 61p (see Fig. 11B) of the base portion 10d at the tilting operation side (the Y2 direction side shown in Fig. 14B) presses the facing fourth movable member H43, and the fourth movable member H43 is rotated downward. The fourth movable magnetic body M44 provided at the fourth movable member H43 is also rotated and makes the tilting motion in the second direction.

The second movable magnetic body M24 being the other one forming the pair with the fourth movable magnetic body M44 is strongly attracted to the second counter magnetic body T24 through the cushioning member. However, the tilting motion in the second direction of the second movable magnetic body M24 is stopped by the protruding portion 32t of the seat portion 32d provided at the frame body 32. As shown in Fig. 14B, the second movable magnetic body M24 is separated from the fourth movable magnetic body M44, and the attracted state between the second movable magnetic body M24 and the fourth movable magnetic body M44 is changed from the strongly attracted state to the weakly attracted state. At this time, the operation member 10 is moved from the reference position P2 to the rear first position S23 (see Fig. 4B), and the operator can obtain a tactile feel (a click feel) at the movement from the reference position P2 to the rear first position S23. In the second embodiment of the invention, the protruding portion 32t of the seat portion 32d provided at the second direction side, or more particularly, a surface of the protruding portion 32t facing the second movable magnetic body M24 stops the tilting motion of the second movable magnetic body M24. This surface serves as the stopper portion 26 (for easier understanding, referred to as stopper portion 26c).

Further, when the operator continues the tilting operation from the position (the rear first position S23) shown in Fig. 14B in the second direction (the Y2 direction), the operation member 10 is further rotated, the fifth pressing portion 51p (see Fig. 11B) of the base portion 10d located at the opposite side (the Y1 direction side shown in Fig. 14B) to the tilting operation side presses the facing third movable member H33, and the third movable member H33 is rotated upward. The third movable magnetic body M34 provided at the third movable member H33 is also rotated and makes the tilting motion in the second direction.

The first movable magnetic body M14 being the other one forming the pair with the third movable magnetic body M34 is strongly attracted to the first counter magnetic body T14 through the cushioning member. However, the tilting motion in the second direction of the first movable magnetic body M14 is stopped by the protruding portion 32t of the seat portion 32d provided at the frame body 32. As shown in Fig. 14C, the first movable magnetic body M14 is separated from the third movable magnetic body M34, and the attracted state between the first movable magnetic body M14 and the third movable magnetic body M34 is changed from the strongly attracted state to the weakly attracted state. At this time, the operation member 10 is moved from the rear first position S23 to the rear second position S24 (see Fig. 4B), and the operator can obtain a tactile feel (a click feel) at the movement from the rear first position S23 to the rear second position S24. In the second embodiment of the invention, the protruding portion 32t of the seat portion 32d provided at the first direction side, or more particularly, a surface of the protruding portion 32t facing the first movable magnetic body M14 stops the tilting motion of the first movable magnetic body M14. This surface serves as the stopper portion 26 (for easier understanding, referred to as stopper portion 26d).

The operation device 102 according to the second embodiment of the invention configured as described above is specifically configured such that when the tilting operation is performed on the operation member 10 in the second direction (the Y2 direction shown in Figs. 14A to 14C), the sixth pressing portion 61p of the base portion 10d presses the fourth movable member H43, the fourth movable magnetic body M44 provided at the fourth movable member H43 makes the tilting motion, and the stopper portion 26 (26c) stops the tilting motion of the second movable magnetic body M24 provided at the second movable member H23. When the tilting operation is further continued in the second direction (the tilting operation direction), the fifth pressing portion 51p presses the third movable member H33, the third movable magnetic body M34 provided at the third movable member H33 makes the tilting motion, and the stopper portion 26 (26d) stops the tilting motion of the first movable magnetic body M14 provided at the first movable member H13. Accordingly, the fourth movable magnetic body M44 making the tilting motion is easily separated from the second movable magnetic body M24 stopped by the stopper portion 26c. When the tilting operation is further continued in the second direction, the third movable magnetic body M34 located at the opposite side with respect to the tilting shaft 12e and making the tilting motion is easily separated from the first movable magnetic body M14 stopped by the stopper portion 26d. Accordingly, the pair of the second movable magnetic body M24 and the fourth movable magnetic body M44 can be easily separated from each other, and the pair of the first movable magnetic body M14 and the third movable magnetic body M34 can be easily separated from each other depending on each of the positions (the rear first position S23 and the rear second position S24). Therefore, the operation device 102 having a tactile feel can be easily fabricated.

Also, in the second embodiment of the invention, the operation member 10 is tilted in the Y1 direction or the Y2 direction, and as shown in Figs. 13B and 13C, or Figs. 14B and 14C, the pair of movable magnetic bodies MM (the first movable magnetic body M14 and the third movable magnetic body M34, or the second movable magnetic body M24 and the fourth movable magnetic body M44) may be arranged at positions at which the attraction forces acting therebetween are not lost when the pair of the movable magnetic bodies MM are separated from each other. Accordingly, if the force of the tilting operation by the operator is removed at each of the positions (the front first position S21, the front second position S22, the rear first position S23, and the rear second position S24), the pair of movable magnetic bodies MM are attracted to each other by their attraction forces. Accordingly, the operation member 10 can be automatically returned to the reference position (the reference position P2) without use of a returning member for automatic return.

Instead of the above-described arrangement positional relationship between the plurality of movable magnetic bodies MM, the plurality of movable magnetic bodies MM may be arranged by an arrangement positional relationship described below. That is, after the first movable magnetic body M14 and the third movable magnetic body M34 are separated from each other and before the second movable magnetic body M24 and the fourth movable magnetic body M44 are separated from each other, the pair of the first movable magnetic body M14 and the third movable magnetic body M34 may be arranged at positions at which the attraction forces acting therebetween are not lost. The pair of the second movable magnetic body M24 and the fourth movable magnetic body M44 may be preferably arranged at positions at which the attraction forces acting therebetween are not lost even though the attraction forces acting between the first movable magnetic body M14 and the third movable magnetic body M34 are lost when the second movable magnetic body M24 and the fourth movable magnetic body M44 are separated from each other. Accordingly, when the force of the tilting operation by the operator is removed, the attraction between the second movable magnetic body M24 and the fourth movable magnetic body M44 is provided, and then the attraction between the first movable magnetic body M14 and the third movable magnetic body M34 is provided. Hence, the operation member 10 can be automatically returned to the reference position without use of a returning member for automatic return.

As described above, the operation device 102 according to the second embodiment of the invention can be preferably applied to the vehicle shift device 500 having the shift arrangement (the shift pattern) shown in Fig. 4A. That is, since the vehicle shift device 500 according to the second embodiment of the invention has the shift arrangement (the shift pattern) that allows an operation to each of the positions (the front first position S21, the front second position S22, the reference position P2, the rear first position S23, and the rear second position S24) to be performed, the operation device 102 can be preferably applied to this vehicle shift device 500. Accordingly, the vehicle shift device 500 can perform a shift operation having a tactile feel. In addition, since the portion that generates a tactile feel does not include a sliding mechanism unlike the related art, the vehicle shift device 500 has high durability.

Further, when the operation member 10 of the operation device 102 is at the reference position, every pair of movable magnetic bodies MM is in the attracted state with the counter magnetic body TM interposed therebetween. Hence, when the shift knob 50N engaged with the operation member 10 is at the reference position, rattling is not generated at the shift knob 50N even during traveling of the vehicle. The operation device is further preferable for the vehicle shift device 500.

The invention is not limited to the above-described embodiment, and may be implemented by modifying the embodiment, for example, as described below. These modified embodiments also pertain to the technical scope of the invention.

### First Modification

In the above-described first embodiment, the stopper portion 6 is preferably provided at the frame body 32 of the support body 2; however, it is not limited thereto. For example, a new member may be provided to stop the tilting motion of the movable magnetic body MM.

### Second Modification

In the above-described first embodiment, the end surfaces at both end sides in the X direction of one of the pair of movable magnetic bodies MM are bent to face end surfaces of the other; however, it is not limited thereto. For example, if the movable magnetic bodies MM and the movable members HK are separately formed as individual members, end surfaces at both end sides in the Y direction (being orthogonal to the X direction) of one of the pair of movable magnetic bodies MM may be bent to face end surfaces of the other.

### Third Modification

In the above-described embodiments, the counter magnetic bodies TM (the first counter magnetic body T14 and the second counter magnetic body T24) are respectively fixed to the first movable magnetic body M14 and the fourth movable magnetic body M44 each being one of the corresponding pair of movable magnetic bodies MM; however, it is not limited thereto. The counter magnetic body TM is only required to be fixed to any one of the pair of movable magnetic bodies MM, and the combination is desirably determined.

### Fourth Modification

In the above-described embodiments, the tilting shaft 12e of the support body 2 is preferably made of a soft magnetic material; however, it is not limited thereto. For example, a metal material, such as non-magnetic aluminum or a copper alloy may be used, or a non-magnetic synthetic resin material may be used.

### Fifth Modification

In the above-described embodiments, the counter magnetic bodies TM (the first counter magnetic body T14 and the second counter magnetic body T24) have the same size, the same shape, and the same strength of magnetic field; however, the strength of magnetic field may be different between the left and right counter magnetic bodies TM. Accordingly, the operation feel in the tilting direction KD can be changed.

The invention is not limited to the above-described embodiments, and may be properly modified within the scope of the invention.

## Claims

1. An operation device (101) including an operation member (1) being able to make a tilting motion in response to an operation by an operator, and a support body (2) supporting the operation member (1) to be able to make the tilting motion, the operation device (101) having a plurality of positions at which the operation member (1) is located in response to a tilting operation from a reference position by the operator, **characterised in that** the operation device (101) comprises:
a plurality of stopper portions (6) respectively corresponding to the plurality of positions;
a plurality of movable members (HK) making the tilting motion together with the operation member (1);
a pair of movable magnetic bodies (MM) respectively provided at the movable members (HK) and facing each other; and
a counter magnetic body (TM) arranged between the pair of movable magnetic bodies (MM),
wherein the movable magnetic bodies (MM) each are a soft magnetic material, and the counter magnetic body (TM) is a permanent magnet,
wherein the counter magnetic body (TM) is fixed to one of the pair of movable magnetic bodies (MM),
wherein, when the operation member (1) is at the reference position, the pair of movable magnetic bodies (MM) are closely arranged and attracted to each other, and
wherein, when the operation member (1) is tilted from the reference position and is located at one of the plurality of positions, one of the pair of movable magnetic bodies (MM) makes the tilting motion, and the tilting motion of the other one of the pair of movable magnetic bodies (MM) is stopped by the corresponding stopper portion (6).

2. The operation device (101) according to Claim 1,
wherein the movable members (HK) each are a soft magnetic material, and each are integrally formed with the corresponding movable magnetic body (MM).

3. The operation device (101) according to claim 1 or 2,
wherein the support body (2) includes a tilting shaft (12e) allowing the operation member (1) to make the tilting motion,
wherein the operation member (1) includes a columnar operation shaft (1j), and a base portion (1d) extending in a plane, an axis center of the operation shaft (1j) penetrating through the plane,
wherein the base portion (1d) rotates around the tilting shaft (12e) as an axis center,
wherein the base portion (1d) includes a first pressing portion (11p) and a second pressing portion (21p) respectively provided at both sides of the operation shaft (1j) with the tilting shaft (12e) interposed therebetween,
wherein the plurality of movable members (HK) include a first movable member (H13) arranged to face the first pressing portion (11p), and a second movable member (H23) arranged to face the second pressing portion (21p),
wherein the plurality of movable magnetic bodies (MM) include a first movable magnetic body (M14) provided at the first movable member (H13), a second movable magnetic body (M24) provided at the second movable member (H23), a third movable magnetic body (M34) forming a pair with the first movable magnetic body (M14), and a fourth movable magnetic body (M44) forming a pair with the second movable magnetic body (M24),
wherein the plurality of movable members (HK) include a third movable member (H33) provided with the third movable magnetic body (M34), and a fourth movable member (H43) provided with the fourth movable magnetic body (M44),
wherein, when the operation member (1) receives the tilting operation in a first direction, the first pressing portion (11p) making the tilting motion in a tilting operation direction of the base portion (1d) presses the facing first movable member (H13), the first movable magnetic body (M14) provided at the first movable member (H13) makes the tilting motion, the corresponding stopper portion (6) stops the tilting motion of the third movable magnetic body (M34), and the first movable magnetic body (M14) is separated from the third movable magnetic body (M34), and
wherein, when the tilting operation is further continued in the first direction, the second pressing portion (21p) presses the facing second movable member (H23), the second movable magnetic body (M24) provided at the second movable member (H23) makes the tilting motion, the corresponding stopper portion (6) stops the tilting motion of the fourth movable magnetic body (M44), and the second movable magnetic body (M24) is separated from the fourth movable magnetic body (M44).

4. The operation device (101) according to Claim 3,
wherein the base portion (1d) includes a third pressing portion (31p) facing the third movable member (H33), and a fourth pressing portion (41p) facing the fourth movable member (H43),
wherein the third pressing portion (31p) and the fourth pressing portion (41p) are respectively provided at both sides of the operation shaft (1j) with the tilting shaft (12e) interposed therebetween,
wherein, when the operation member (1) receives the tilting operation in a second direction, the third pressing portion (31p) making the tilting motion in the tilting operation direction of the base portion (1d) presses the facing third movable member (H33), the third movable magnetic body (M34) provided at the third movable member (H33) makes the tilting motion, the corresponding stopper portion (6) stops the tilting motion of the first movable magnetic body (M14), and the first movable magnetic body (M14) is separated from the third movable magnetic body (M34), and
wherein, when the tilting operation is further continued in the second direction, the fourth pressing portion (41p) presses the facing fourth movable member (H43), the fourth movable magnetic body (M44) provided at the fourth movable member (H43) makes the tilting motion, the corresponding stopper portion (6) stops the tilting motion of the second movable magnetic body (M24), and the second movable magnetic body (M24) is separated from the fourth movable magnetic body (M44).

5. The operation device (101) according to Claim 3,
wherein the base portion includes a fifth pressing portion (51p) facing the third movable member (H33), and a sixth pressing portion (61p) facing the fourth movable member (H43),
wherein the fifth pressing portion (51p) and the sixth pressing portion (61p) are respectively provided at both sides of the operation shaft (1j) with the tilting shaft (12e) interposed therebetween,
wherein, when the operation member (1) receives the tilting operation in a second direction, the sixth pressing portion (61p) making the tilting motion in the tilting operation direction of the base portion (1d) presses the facing fourth movable member (H43), the fourth movable magnetic body (M44) provided at the fourth movable member (H43) makes the tilting motion, the corresponding stopper portion (6) stops the tilting motion of the second movable magnetic body (M24), and the second movable magnetic body (M24) is separated from the fourth movable magnetic body (M44), and
wherein, when the tilting operation is further continued in the second direction, the fifth pressing portion (51p) presses the facing third movable member (H33), the third movable magnetic body (M34) provided at the third movable member (H33) makes the tilting motion, the corresponding stopper portion (6) stops the tilting motion of the first movable magnetic body (M14), and the first movable magnetic body (M14) is separated from the third movable magnetic body (M34).

6. The operation device (101) according to any one of Claims 1 to 5, wherein both end sides of each of the pair of movable magnetic bodies (MM) are bent so that end surfaces of one of the pair of movable magnetic bodies (MM) face end surfaces of the other.

7. The operation device (101) according to any one of Claims 1 to 6, wherein, when the operation member (1) is tilted and the pair of movable magnetic bodies (MM) are separated from each other, the pair of movable magnetic bodies (MM) are arranged at positions at which attraction forces acting therebetween are not lost.

8. A vehicle shift device (500) comprising:
the operation device (101) according to any one of Claims 1 to 7;
a control unit (50C) for receiving a signal from the operation device (101) and transmitting a signal to a vehicle-side device;
a shift knob (50N) engaged with the operation member (1) of the operation device (101) and gripped by the operator; and
position detecting means for detecting the plurality of positions at which the operation member (1) is located.

## Patentansprüche

1. Betätigungsvorrichtung (101) mit einem Betätigungselement (1), das in der Lage ist, eine Kippbewegung in Reaktion auf eine Betätigung durch eine Bedienungsperson auszuführen, und mit einem Abstützkörper (2), der das Betätigungselement (1) derart abstützt, dass dieses die Kippbewegung ausführen kann, wobei die Betätigungsvorrichtung (101) eine Mehrzahl von Positionen aufweist, in denen sich das Betätigungselement (1) in Reaktion auf eine Kippbetätigung von einer Referenzposition durch die Bedienungsperson befindet, wobei die Betätigungsvorrichtung (101) aufweist:
eine Mehrzahl von Anschlagbereichen (6), die jeweils der Mehrzahl von Positionen entsprechen;
eine Mehrzahl von beweglichen Elementen (HK), die die Kippbewegung zusammen mit dem Betätigungselement (1) ausführen;
ein Paar beweglicher Magnetkörper (MM), die jeweils an den beweglichen Elementen (HK) vorgesehen sind und einander zugewandt gegenüberliegen; und
einen Gegenmagnetkörper (TM), der zwischen dem Paar der beweglichen Magnetkörper (MM) angeordnet ist,
wobei die beweglichen Magnetkörper (MM) jeweils aus einem weichmagnetischen Material gebildet sind und der Gegenmagnetkörper (TM) ein Permanentmagnet ist,
wobei der Gegenmagnetkörper (TM) an einem von dem Paar der beweglichen Magnetkörper (MM) befestigt ist,
wobei dann, wenn sich das Betätigungselement (1) in der Referenzposition befindet, das Paar der beweglichen Magnetkörper (MM) nahe beieinander angeordnet und aneinander angezogen ist, und
wobei dann, wenn das Betätigungselement (1) von der Referenzposition gekippt ist und sich in einer von der Mehrzahl von Positionen befindet, der eine von dem Paar der beweglichen Magnetkörper (MM) die Kippbewegung ausführt und die Kippbewegung von dem anderen des Paares der beweglichen Magnetkörper (MM) durch den entsprechenden Anschlagbereich (6) gestoppt wird.

2. Betätigungsvorrichtung (101) nach Anspruch 1,
wobei die beweglichen Elemente (HK) jeweils aus einem weichmagnetischen Material gebildet sind und mit dem entsprechenden beweglichen Magnetkörper (MM) jeweils einstückig ausgebildet sind.

3. Betätigungsvorrichtung (101) nach Anspruch 1 oder 2,
wobei der Abstützkörper (2) eine Kippwelle (12e) aufweist, die dem Betätigungselement (1) die Ausführung der Kippbewegung ermöglicht, wobei das Betätigungselement (1) eine säulenartige Betätigungswelle (1j) und einen Basisbereich (1d) aufweist, der sich in einer Ebene erstreckt, wobei ein Achsenzentrum der Betätigungswelle (1j) durch die Ebene hindurchgeht,
wobei sich der Basisbereich (1d) um die Kippwelle (12e) als Achsenzentrum rotationsmäßig bewegt,
wobei der Basisbereich (1d) einen ersten Drückbereich (11p) und einen zweiten Drückbereich (21p) aufweist, die unter Zwischenanordnung der Kippwelle (12e) jeweils beidseits von der Betätigungswelle (1j) vorgesehen sind,
wobei die Mehrzahl der beweglichen Elemente (HK) ein erstes bewegliches Element (H13), das dem ersten Drückbereich (11p) zugewandt gegenüberliegend angeordnet ist, und ein zweites bewegliches Element (H23) aufweist, das dem zweiten Drückbereich (21p) zugewandt gegenüberliegend angeordnet ist,
wobei die Mehrzahl der beweglichen Magnetkörper (MM) einen an dem ersten beweglichen Element (H13) vorgesehenen ersten beweglichen Magnetkörper (M14), einen an dem zweiten beweglichen Element (H23) vorgesehenen zweiten beweglichen Magnetkörper (M24), einen dritten beweglichen Magnetkörper (M34), der mit dem ersten beweglichen Magnetkörper (M14) ein Paar bildet, sowie einen vierten beweglichen Magnetkörper (M44) beinhaltet, der mit dem zweiten beweglichen Magnetkörper (M24) ein Paar bildet,
wobei die Mehrzahl der beweglichen Elemente (HK) ein drittes bewegliches Element (H33), das an dem dritten beweglichen Magnetkörper (M34) vorgesehen ist, sowie ein viertes bewegliches Element (H43) beinhaltet, das an dem vierten beweglichen Magnetkörper (M44) vorgesehen ist,
wobei dann, wenn das Betätigungselement (1) die Kippbetätigung in einer ersten Richtung empfängt, der die Kippbewegung in einer Kippbetätigungsrichtung des Basisbereichs (1d) ausführende erste Drückbereich (11p) das zugewandt gegenüberliegende erste bewegliche Element (H13) mit Druck beaufschlagt, der an dem ersten beweglichen Element (H13) vorgesehene erste bewegliche Magnetkörper (M14) die Kippbewegung ausführt, der entsprechende Anschlagbereich (6) die Kippbewegung des dritten beweglichen Magnetkörpers (M34) stoppt und der erste bewegliche Magnetkörper (M14) von dem dritten beweglichen Magnetkörper (M34) getrennt wird, und
wobei dann, wenn die Kippbetätigung in der ersten Richtung weiter fortgesetzt wird, der zweite Drückbereich (21p) das zugewandt gegenüberliegende zweite bewegliche Element (H23) mit Druck beaufschlagt, der an dem zweiten beweglichen Element (H23) vorgesehene zweite bewegliche Magnetkörper (M24) die Kippbewegung ausführt, der entsprechende Anschlagbereich (6) die Kippbewegung des vierten beweglichen Magnetkörpers (M44) stoppt und der zweite bewegliche Magnetkörper (M24) von dem vierten beweglichen Magnetkörper (M44) getrennt wird.

4. Betätigungsvorrichtung (101) nach Anspruch 3,
wobei der Basisbereich (1d) einen dritten Drückbereich (31p), der dem dritten beweglichen Element (H33) zugewandt gegenüberliegt, und einen vierten Drückbereich (41p) aufweist, der dem vierten beweglichen Element (H43) zugewandt gegenüberliegt,
wobei der dritte Drückbereich (31p) und der vierte Drückbereich (41p) unter Zwischenanordnung der Kippwelle (12e) jeweils beidseits von der Betätigungswelle (1j) vorgesehen sind,
wobei dann, wenn das Betätigungselement (1) die Kippbetätigung in einer zweiten Richtung empfängt, der die Kippbewegung in der Kippbetätigungsrichtung des Basisbereichs (1d) ausführende dritte Drückbereich (31p) das zugewandt gegenüberliegende dritte bewegliche Element (H33) mit Druck beaufschlagt, der an dem dritten beweglichen Element (H33) vorgesehene dritte bewegliche Magnetkörper (M34) die Kippbewegung ausführt, der entsprechende Anschlagbereich (6) die Kippbewegung des ersten beweglichen Magnetkörpers (M14) stoppt und der erste bewegliche Magnetkörper (M14) von dem dritten beweglichen Magnetkörper (M34) getrennt wird, und
wobei dann, wenn die Kippbetätigung in der zweiten Richtung weiter fortgesetzt wird, der vierte Drückbereich (41p) das zugewandt gegenüberliegende vierte bewegliche Element (H43) mit Druck beaufschlagt, der an dem vierten beweglichen Element (H43) vorgesehene vierte bewegliche Magnetkörper (M44) die Kippbewegung ausführt, der entsprechende Anschlagbereich (6) die Kippbewegung des zweiten beweglichen Magnetkörpers (M24) stoppt und der zweite bewegliche Magnetkörper (M24) von dem vierten beweglichen Magnetkörper (M44) getrennt wird.

5. Betätigungsvorrichtung (101) nach Anspruch 3,
wobei der Basisbereich einen fünften Drückbereich (51p), der dem dritten beweglichen Element (H33) zugewandt gegenüberliegt, sowie einen sechsten Drückbereich (61p) aufweist, der dem vierten beweglichen Element (H43) zugewandt gegenüberliegt,
wobei der fünfte Drückbereich (51p) und der sechste Drückbereich (61p) unter Zwischenanordnung der Kippwelle (12e) jeweils beidseits von der Betätigungswelle (1j) vorgesehen sind,
wobei dann, wenn das Betätigungselement (1) die Kippbetätigung in einer zweiten Richtung empfängt, der die Kippbewegung in der Kippbetätigungsrichtung des Basisbereichs (1d) ausführende sechste Drückbereich (61p) das zugewandt gegenüberliegende vierte bewegliche Element (H43) mit Druck beaufschlagt, der an dem vierten beweglichen Element (H43) vorgesehene vierte bewegliche Magnetkörper (M44) die Kippbewegung ausführt, der entsprechende Anschlagbereich (6) die Kippbewegung des zweiten beweglichen Magnetkörpers (M24) stoppt und der zweite bewegliche Magnetkörper (M24) von dem vierten beweglichen Magnetkörper (M44) getrennt wird, und
wobei dann, wenn die Kippbetätigung in der zweiten Richtung weiter fortgesetzt wird, der fünfte Drückbereich (51p) das zugewandt gegenüberliegende dritte bewegliche Element (H33) mit Druck beaufschlagt, der an dem dritten beweglichen Element (H33) vorgesehene dritte bewegliche Magnetkörper (M34) die Kippbewegung ausführt, der entsprechende Anschlagbereich (6) die Kippbewegung des ersten beweglichen Magnetkörpers (M14) stoppt und der erste bewegliche Magnetkörper (M14) von dem dritten beweglichen Magnetkörper (M34) getrennt wird.

6. Betätigungsvorrichtung (101) nach einem der Ansprüche 1 bis 5,
wobei beide Endseiten des jeweiligen Paares von beweglichen Magnetkörpern (MM) derart gebogen sind, dass Endflächen von einem der beiden beweglichen Magnetkörper (MM) Endflächen des anderen Magnetkörpers (MM) zugewandt gegenüberliegen.

7. Betätigungsvorrichtung (101) nach einem der Ansprüche 1 bis 6,
wobei dann, wenn das Betätigungselement (1) gekippt ist und das Paar der beweglichen Magnetkörper (MM) voneinander getrennt ist, das Paar der beweglichen Magnetkörper (MM) in Positionen angeordnet ist, in denen dazwischen wirkende Anziehungskräfte nicht verloren gehen.

8. Fahrzeugschaltvorrichtung (500), aufweisend:
die Betätigungsvorrichtung (101) nach einem der Ansprüche 1 bis 7;
eine Steuereinheit (50C) zum Empfangen eines Signals von der Betätigungsvorrichtung (101) und zum Übertragen eines Signals zu einer fahrzeugseitigen Vorrichtung;
einen Schaltknopf (50N), der mit dem Betätigungselement (1) der Betätigungsvorrichtung (101) zusammenwirkt und von der Bedienperson gegriffen wird; und
eine Positionserfassungseinrichtung zum Erfassen der Mehrzahl von Positionen, in denen sich das Betätigungselement (1) befindet.

## Revendications

1. Dispositif d'actionnement (101) incluant un élément d'actionnement (1) pouvant effectuer un mouvement d'inclinaison en réponse à une utilisation par un opérateur, et un corps de support (2) supportant l'élément d'actionnement (1) pour pouvoir effectuer le mouvement d'inclinaison, le dispositif d'actionnement (101) ayant une pluralité de positions dans lesquelles l'élément d'actionnement (1) est situé en réponse à une opération d'inclinaison depuis une position de référence par l'opérateur, **caractérisé en ce que** le dispositif d'actionnement (101) comprend :
une pluralité de parties d'arrêt (6) correspondant respectivement à la pluralité de positions ;
une pluralité d'éléments mobiles(HK) effectuant le mouvement d'inclinaison conjointement avec l'élément d'actionnement (1) ;
une paire de corps magnétiques mobiles (MM) placés respectivement au niveau des éléments mobiles (HK) et se faisant face ; et
un corps magnétique de compteur (TM) agencé entre la paire de corps magnétiques mobiles (MM),
dans lequel les corps magnétiques mobiles (MM) sont chacun un matériau magnétique doux, et le corps magnétique de compteur (TM) est un aimant permanent,
dans lequel le corps magnétique de compteur (TM) est fixé sur un de la paire de corps magnétiques mobiles (MM),
dans lequel, quand l'élément d'actionnement (1) est dans la position de référence, la paire de corps magnétiques mobiles (MM) sont agencés proches et attirés l'un vers l'autre, et
dans lequel, quand l'élément d'actionnement (1) est incliné depuis la position de référence et est situé dans l'une de la pluralité de positions, l'un de la paire de corps magnétiques mobiles (MM) fait le mouvement d'inclinaison, et le mouvement d'inclinaison de l'autre de la paire de corps magnétiques mobiles (MM) est stoppé par la partie d'arrêt (6) correspondante.

2. Dispositif d'actionnement (101) selon la revendication 1,
dans lequel les éléments mobiles (HK) sont chacun un matériau magnétique doux, et sont chacun formés d'un seul bloc avec le corps magnétique mobile (MM) correspondant.

3. Dispositif d'actionnement (101) selon la revendication 1 ou 2,
dans lequel le corps de support (2) inclut un arbre d'inclinaison (12e) permettant à l'élément d'actionnement (1) d'effectuer le mouvement d'inclinaison,
dans lequel l'élément d'actionnement (1) inclut un arbre d'actionnement en colonne (1j) et une partie de base (1d) s'étendant dans un plan, un centre axial de l'arbre d'actionnement (1j) pénétrant à travers le plan,
dans lequel la partie de base (1d) tourne autour de l'arbre d'inclinaison (12e) comme centre axial,
dans lequel la partie de base (1d) inclut une première partie de pression (11p) et une seconde partie de pression (21p) placées respectivement des deux côtés de l'arbre d'actionnement (1j) avec l'arbre d'inclinaison (12e) intercalé entre elles,
dans lequel la pluralité d'éléments mobiles (HK) inclut un premier élément mobile (H13) agencé pour faire face à la première partie de pression (11p), et un second élément mobile (H23) agencé pour faire face à la seconde partie de pression (21p),
dans lequel la pluralité de corps magnétiques mobiles (MM) inclut un premier corps magnétique mobile (M14) placé au niveau du premier élément mobile (H13), un second corps magnétique mobile (M24) placé au niveau du second élément mobile (H23), un troisième corps magnétique mobile (M34) formant une paire avec le premier corps magnétique mobile (M14), et un quatrième corps magnétique mobile (M44) formant une paire avec le second corps magnétique mobile (M24),
dans lequel la pluralité d'éléments mobiles (HK) inclut un troisième élément mobile (H33) pourvu du troisième corps magnétique mobile (M34), et un quatrième élément mobile (H43) pourvu du quatrième corps magnétique mobile (M44),
dans lequel, quand l'élément d'actionnement (1) reçoit l'opération d'inclinaison dans une première direction, la première partie de pression (11p) réalisant le mouvement d'inclinaison dans une direction d'opération d'inclinaison de la partie de base (1d) presse le premier élément mobile (H13) qui lui fait face, le premier corps magnétique mobile (M14) placé au niveau du premier élément mobile (H13) réalise le mouvement d'inclinaison, la partie d'arrêt (6) correspondante arrête le mouvement d'inclinaison du troisième corps magnétique mobile (M34), et le premier corps magnétique mobile (M14) est séparé du troisième corps magnétique mobile (M34), et
dans lequel, quand l'opération d'inclinaison est encore continuée dans la première direction, la seconde partie de pression (21p) presse le second élément mobile (H23) qui lui fait face, le second corps magnétique mobile (M24) placé au niveau du second élément mobile (H23) réalise le mouvement d'inclinaison, la partie d'arrêt (6) correspondante stoppe le mouvement d'inclinaison du quatrième corps magnétique mobile (M44), et le second corps magnétique mobile (M24) est séparé du quatrième corps magnétique mobile (M44).

4. Dispositif d'actionnement (101) selon la revendication 3,
dans lequel la partie de base (1d) inclut une troisième partie de pression (31p) faisant face au troisième élément mobile (H33), et une quatrième partie de pression (41p) faisant face au quatrième élément mobile (H43),
dans lequel la troisième partie de pression (31p) et la quatrième partie de pression (41p) sont placées respectivement des deux côtés de l'arbre d'actionnement (1j) avec l'arbre d'inclinaison (12e) intercalé entre elles,
dans lequel, quand l'élément d'actionnement (1) reçoit l'opération d'inclinaison dans une seconde direction, la troisième partie de pression (31p) réalisant le mouvement d'inclinaison dans la direction d'opération d'inclinaison de la partie de base (1d) presse le troisième élément mobile (H33) qui lui fait face, le troisième corps magnétique mobile (M34) placé au niveau du troisième élément mobile (H33) réalise le mouvement d'inclinaison, la partie d'arrêt (6) correspondante stoppe le mouvement d'inclinaison du premier corps magnétique mobile (M14), et le premier corps magnétique mobile (M14) est séparé du troisième corps magnétique mobile (M34), et
dans lequel, quand l'opération d'inclinaison est encore continuée dans la seconde direction, la quatrième partie de pression (41p) presse le quatrième élément mobile (H43) qui lui fait face, le quatrième corps magnétique mobile (M44) placé au niveau du quatrième élément mobile (H43) réalise le mouvement d'inclinaison, la partie d'arrêt (6) correspondante stoppe le mouvement d'inclinaison du second corps magnétique mobile (M24), et le second corps magnétique mobile (M24) est séparé du quatrième corps magnétique mobile (M44).

5. Dispositif d'actionnement (101) selon la revendication 3,
dans lequel la partie de base inclut une cinquième partie de pression (51p) qui fait face au troisième élément mobile (H33), et une sixième partie de pression (61p) qui fait face au quatrième élément mobile (H43),
dans lequel la cinquième partie de pression (51p) et la sixième partie de pression (61p) sont respectivement placées des deux côtés de l'arbre d'actionnement (1j) avec l'arbre d'inclinaison (12e) intercalé entre elles,
dans lequel, quand l'élément d'actionnement (1) reçoit l'opération d'inclinaison dans une seconde direction, la sixième partie de pression (61p) réalisant le mouvement d'inclinaison dans la direction d'opération d'inclinaison de la partie de base (1d) presse le quatrième élément mobile (H43) qui lui fait face, le quatrième corps magnétique mobile (M44) placé au niveau du quatrième élément mobile (H43) réalise le mouvement d'inclinaison, la partie d'arrêt (6) correspondante stoppe le mouvement d'inclinaison du second corps magnétique mobile (M24), et le second corps magnétique mobile (M24) est séparé du quatrième corps magnétique mobile (M44), et
dans lequel, quand l'opération d'inclinaison est encore continuée dans la seconde direction, la cinquième partie de pression (51p) presse le troisième élément mobile (H33) qui lui fait face, le troisième corps magnétique mobile (M34) placé au niveau du troisième élément mobile (H33) réalise le mouvement d'inclinaison, la partie d'arrêt (6) correspondante stoppe le mouvement d'inclinaison du premier corps magnétique mobile (M14), et le premier corps magnétique mobile (M14) est séparé du troisième corps magnétique mobile (M34).

6. Dispositif d'actionnement (101) selon l'une quelconque des revendications 1 à 5, dans lequel les deux côtés d'extrémité de chacun de la paire de corps magnétiques mobiles (MM) sont courbés de telle manière que des surfaces d'extrémité de l'un de la paire de corps magnétiques mobiles (MM) fait face à des surfaces d'extrémité de l'autre.

7. Dispositif d'actionnement (101) selon l'une quelconque des revendications 1 à 6, dans lequel, quand l'élément d'actionnement (1) est incliné et la paire de corps magnétiques mobiles (MM) sont séparés l'un de l'autre, la paire de corps magnétiques mobiles (MM) sont agencés en des positions dans lesquelles des forces d'attraction agissant entre eux ne sont pas perdues.

8. Dispositif de changement de vitesses de véhicule (500) comprenant :
le dispositif d'actionnement (101) selon l'une quelconque des revendications 1 à 7 ;
une unité de commande (50C) pour recevoir un signal depuis le dispositif d'actionnement (101) et transmettre un signal vers un dispositif côté véhicule ;
un bouton de changement de vitesse (50N) en prise avec l'élément d'actionnement (1) du dispositif d'actionnement (101) et saisi par l'opérateur ; et
des moyens de détection de position pour détecter la pluralité de positions dans lesquelles l'élément d'actionnement (1) est situé.
